# EUROPEAN PATENT APPLICATION

(11) **EP 2 200 284 A1**
(43) Date of publication of application: **23.06.2010**
(21) Application number: 08831245.9
(22) Date of filing: 08.09.2008
(51) Int. Cl.: H04N 5/445, H04N 7/173

(54) **DATA APPLICAION METHOD IN AUDIO VISUAL DEVICE**

(30) Priority: 11.09.2007 JP 2007236013
(71) Applicant: Sharp Kabushiki Kaisha, Osaka-shi, Osaka 545-8522 (JP)
(72) Inventor: FUJIMOTO, Kinya, Osaka 545-8522 (JP)
(74) Representative: Müller - Hoffmann & Partner
(86) International application number: PCT/JP2008/066161
(87) International publication number: WO 2009/034941

(57) **Abstract**

It is an object to provide an audio visual device that can display a picked-up image on a screen for a user to easily recognize the image without imposing an excessive load in terms of a capacity or the like. An audio video device is provided to display a list of picked-up images so that a user can easily recognize them by making use of a cell to display a program table set in the audio visual device in advance. Further, an audio visual device is provided to display a list of Exif information contained in a picked-up image together with the picked-up image on a screen so that a user can easily recognize the image displayed on the screen.

## Description

### Field of the Invention

The present invention relates to an AV apparatus such as a digital television capable of obtaining image data from digital cameras, various memory cards, or other externally-connected AV apparatuses, and displaying the image data on a display screen.

### Background Art

Recently, large, thin-screen TVs with high-definition are becoming increasingly popular, and it is possible to beautifully display more information at once on the large screen. Additionally, various extended functions such as external connection terminals of various communication standards and internet communication functions have been added, so that applicability thereof greatly expands. For example, by connecting to various imaging apparatuses such as a digital camera or a mobile phone, or various memory cards such as a SD card or a memory stick, it is possible to obtain imaging data etc. stored in such memory cards, thereby displaying many images by full scale on the large screen. As described above, large, thin-screen TVs with high-definition are becoming increasingly popular, and are highly suitable for displaying a list of a large number of images, so that it is expected that many users utilize such functions.

Thus, utilization of AV apparatuses, such as digital TVs of recent years having a large, high-definition screen in various uses, is expected. However, there is a deficiency in the digital TV that didn't exist in the conventional analog TV, since the digital TV needs encoding or decoding of the digital data of images, when providing many extended functions as described above, data storage capacity required by the AV apparatus such as the digital TV necessarily increases and a long processing time for display is also required, so that display of desired image is delayed. Therefore, it is necessary to add new functions desired by the user without excessive load on the storage capacity of the AV apparatus and without increasing delay of the processing time for display.

In order to fulfill the above requests, when providing the new functions to the AV apparatus such as a digital TV, the new functions are better to be provided not by newly providing all software necessary for providing the functions, but by utilizing software, which is for other function and has already been given to the AV apparatus. Therefore, it is possible to provide new functions without excessive load on the storage capacity of the AV apparatus. As an example of such method, Japanese Unexamined Patent Application Publication No. 2007-174267 has been disclosed. In Japanese Unexamined Patent Application Publication No. 2007-174267, the 'function of displaying an electronic program guide on a display screen' is utilized, and a list of images etc. obtained from the external devices is displayed on the display screen. As an example of a method for displaying the electronic program guide on a display screen, generally, the AV apparatus such as a digital TV preliminarily stores software such as a 'generating means for a frame of an electronic program guide', or a 'allocating means for 'time' and 'channel' to vertical/horizontal axis of the frame' in the internal memory, and putting 'content of a program listing' obtained via a network interface etc. into the frame generated by such software, thereby displaying the electronic program guide on a display screen (Fig. 1). In Japanese Unexamined Patent Application Publication No. 2007-174267, the 'frame' generated for displaying the program listing is utilized, thereby displaying and watching images obtained from an external memory etc. or thumbnail images thereof. Therefore, the 'function of displaying a listing of images or thumbnail images on the display screen of the AV apparatus' is provided without newly generating a special frame thereof.
Patent Reference 1: Japanese Unexamined Patent Application Publication No. 2007-174267

### Disclosure of the Invention

### Problems that the Invention Tries to Solve

However, in Japanese Unexamined Patent Application Publication No. 2007-174267, only a method for displaying thumbnail images by putting them into existing frames is disclosed, and a method for displaying attribute information of the image such as shooting date and time or a model of imaging device is not disclosed. However, the attribute information of image is very useful to know about the image. Therefore, it is desired to add such function of displaying images together with attribute information thereof.

Accordingly, the present invention provides an AV apparatus for displaying a list of images obtained from the external memory etc. on the display screen, so that the images are easily grasped without excessive load on the storage capacity etc. of the AV apparatus.

### Means for Solving the Problems

In order to solve the above deficiencies, we provide a method for displaying a list of images obtained from the external memory etc. on the display screen using a program listing preliminarily stored in the AV apparatus, so that the images are easily grasped. Moreover, we provide a method, in which the electronic program guide is displayed on the display screen by providing the function of displaying images utilizing image viewer software installed in the AV apparatus, so that the images are easily grasped, and by further utilizing the function of the image viewer software, the electronic program guide is displayed on the display screen. Therefore, the 'generating means for a frame of an electronic program guide', generally installed in the AV apparatus, becomes unnecessary, so that it is possible to remove it from the AV apparatus. Therefore, it is possible to decrease load on the storage capacity etc. of the AV apparatus.

Specifically, the following inventions are provided.

In a first aspect of the present invention, we provide an AV apparatus, comprising a storage for information on generating program guide cells, storing information on generating program guide cells, the information is for generating matrix-type cells for electronic program guide, an acquirer for image information, acquiring image information, and a display, displaying the acquired image information utilizing the information on generating program guide cells.

In a second aspect of the present invention, we provide the AV apparatus based on the first aspect of the present invention, comprising a determination unit, determining whether or not the acquired image information is Exif information, wherein the display comprises means for arranging and displaying based on Exif information, arranging and displaying a still image included in the image information and attribute information relating to the still image in cells in the same line or same column, if the determination result indicates the acquired information is Exif information.

In a third aspect of the present invention, we provide the AV apparatus based on the second aspect of the present invention, wherein the display comprises means for controlling arrangement, controlling the means for arranging and displaying based on Exif information to arrange the still image and the attribute information relating to the still image according to the attribute included in the Exif file.

In a fourth aspect of the present invention, we provide the AV apparatus based on the second or third aspect of the present invention, wherein the Exif file is substituted with a moving image file.

In a fifth aspect of the present invention, we provide the AV apparatus based on any one of the first to fourth aspects of the present invention, comprising a scroll controller, controlling scroll of the program guide cells, and a scroll receiver, receiving input for scrolling cells including the image, wherein the scroll controller controls scroll of cells including the image based on the input for scrolling cells including the image, received by the scroll receiver.

In a sixth aspect of the present invention, we provide the AV apparatus based on the second aspect of the present invention, wherein the display comprises means for displaying thumbnail, arranging and displaying a thumbnail included in the image information in the cell, if the determination result indicates the acquired information is Exif information.

In a seventh aspect of the present invention, we provide an AV apparatus, comprising a storage for information on generating cells for image viewer, storing information on generating cells for image viewer for generating matrix-type cells for the image viewer, an acquirer for program information, acquiring program information in EPG, and a display, displaying the acquired program information utilizing the information on generating cells for image viewer.

In an eighth aspect of the present invention, we provide the AV apparatus based on the seventh aspect of the present invention, comprising a storage for color data, storing color data for displaying color picture, wherein the information on generating cells for image viewer can use the color data for displaying color picture, stored in the storage for color data, in the respective cells.

In a ninth aspect of the present invention, we provide a method for controlling an AV apparatus, storing information on generating program guide cells, the information is for generating matrix-type cells for electronic program guide, the method comprising the following steps of acquiring image information, and displaying the acquired image information utilizing the information on generating program guide cells.

In a tenth aspect of the present invention, we provide the method for controlling an AV apparatus based on the method of the ninth aspect of the present invention, comprising the following steps of determining whether or not the acquired image information is Exif information, wherein the step of displaying comprises a step of arranging and displaying based on Exif information, arranging and displaying a still image included in the image information and attribute information relating to the still image in cells in the same line or same column, if the determination result indicates the acquired information is Exif information.

In an eleventh aspect of the present invention, we provide the method for controlling an AV apparatus based on the method of the tenth aspect of the present invention, wherein the step of displaying comprises a step of controlling arrangement, controlling the arrangement of the still image and the attribute information relating to the still image in the step of arranging and displaying based on Exif information according to the attribute included in the Exif file.

In a twelfth aspect of the present invention, we provide the method for controlling an AV apparatus based on the method of the tenth or eleventh aspect of the present invention, wherein the Exif file is substituted with a moving image file.

In a thirteenth aspect of the present invention, we provide the method for controlling an AV apparatus based on any one of the methods of the ninth to twelfth aspects of the present invention,, comprising the steps of controlling scroll of the program guide cells, and receiving input for scroll of cells including the image, wherein the step of controlling scroll controls scroll of cells including the image based on the input for scrolling cells including the image, received by the step of receiving scroll.

In a fourteenth aspect of the present invention, we provide the method for controlling an AV apparatus based on the method of the tenth aspect of the present invention, wherein the step of displaying comprises a step of displaying thumbnail for arranging and displaying a thumbnail included in the image information in the cell, if the determination result indicates the acquired information is Exif information.

In a fifteenth aspect of the present invention, we provide a method for controlling an AV apparatus, storing information on generating cells for image viewer, the information is for generating matrix-type cells for an image viewer, the method comprising the following steps of acquiring program information in EPG, and displaying the acquired program information utilizing the information on generating cells for image viewer.

In a sixteenth aspect of the present invention, we provide the method for controlling an AV apparatus based on the fifth aspect of the present invention, storing color data for displaying color picture, wherein the information on generating cells for image viewer is configured to utilize the color data for displaying color picture, stored in the storage for color data, in the respective cells.

### Effects of the Invention

According to the present invention provides an AV apparatus, it is possible to display a list of images obtained from the external memory etc. on the display screen, so that the images are easily grasped without excessive load on the storage capacity etc. of the AV apparatus, and to organize and edit the images.

Moreover, when organizing and editing the images obtained from the external memory etc. by installing the image viewer software into the AV apparatus, the user can utilize the image viewer software, and can easily organize and edit the electronic program guide, thereby utilizing the electronic program guide in a new manner, distinguishable from the conventional manner.

### DETAILED DESCRIPTION OF THE INVENTION

Embodiments of the present invention will be described hereinbelow with reference to the drawings. The present invention is not to be limited to the above embodiments and able to be embodied in various forms without departing from the scope thereof.

Note that the first embodiment will mainly describe Claims 1, and 9. The second embodiment will mainly describe Claims 2, 3, 10, and 11. The third embodiment will mainly describe Claims 4, and 12. The fourth embodiment will mainly describe Claims 5, and 13. The fifth embodiment will mainly describe Claims 6, and 14. The sixth embodiment will mainly describe Claims 7, and 15. The seventh embodiment will mainly describe Claims 8, and 16.

### «First embodiment»

### <Concept of First Embodiment>

In an AV apparatus of a first embodiment, the image information obtained from the external devices is put into a 'matrix-type cells for displaying an electronic program guide' preliminarily installed in the AV apparatus, and is displayed. Therefore, it is possible to easily grasp the image information put into the cells and displayed.

Recent AV apparatus has the large and high-definition screen, and is suitable for displaying the images taken by a digital camera etc, so that it is easy to grasp the images. However, when newly installing all of the 'matrix-type cells for displaying images for easy grasp thereof' and 'various functions of organizing the displayed images' etc, this causes excessive load on the storage capacity etc. of the AV apparatus. Therefore, in the AV apparatus of the first embodiment, the 'matrix-type cells for displaying an electronic program guide' preliminarily installed in the AV apparatus is utilized as the 'matrix-type cells for displaying images' in order to display the list of easy organization of the images, thereby displaying the list of the images. Therefore, by newly providing only the 'function of organizing the displayed images' and other necessary functions, it is possible to display the list of the images on the display screen, thereby enabling easy grasp of the images.

This enables display of images taken by the digital camera etc. on the display screen in an easy to organize manner, so that the images are easily grasped without excessive load on the storage capacity etc. of the AV apparatus.

### <Configuration of First Embodiment>

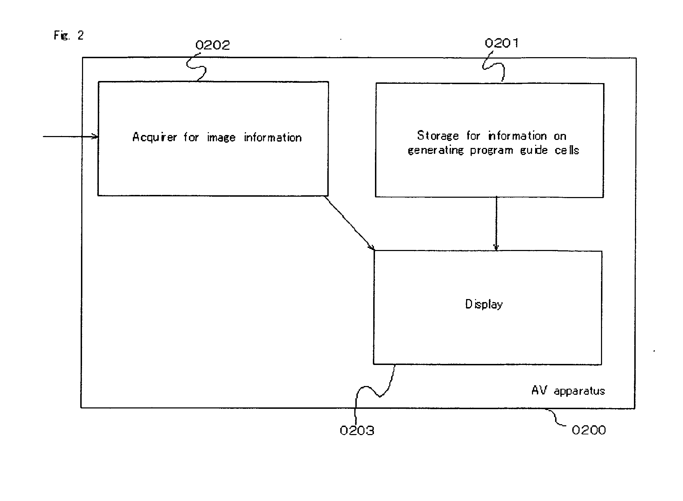

Fig. 2 is a functional block diagram of a broadcasting receiver apparatus of the first embodiment. As shown in Fig. 2, an 'AV apparatus' (0200) comprises a 'storage for information on generating program guide cells' (0201), an 'acquirer for image information' (0202), and a 'display' (0203).

Note that, the functional block of the apparatuses described hereinbelow can be implemented by hardware, software, or both hardware and software. Specifically, in the case of using a computer, examples of the hardware component include a CPU, a RAM, a bus, a secondary storage device (e.g., a hard disk or a nonvolatile memory, a storage media such as CD-ROM or DVD-ROM, and a reading drive for the above media), a printing device and a display device, hardware configurations and I/O ports for other peripheral devices, and a driver program for controlling the above hardware and other application programs, and user-interface for inputting information.

The above hard and software are used for sequential execution of programs operated on the RAM by CPU, for processing, storing and outputting of the data inputted via the interface, or for controlling the respective hardware components. Moreover, the present invention can be implemented not only as an apparatus but also as a means thereof. Moreover, a portion of such inventions may be configured as software. Furthermore, a software product used for causing a computer to execute the software, and the recording medium, in which the software is installed, should be included in the technical scope of the present invention (the same applies through the entire specification).

The 'storage for information on generating program guide cells' (0201) is configured to store information on generating program guide cells, the information is for generating matrix-type cells for electronic program guide.

Hereinbelow, descriptions of the 'AV apparatus' (0200), the 'storage for information on generating program guide cells' (0201), the 'acquirer for image information' (0202), and the 'display' (0203) of the first embodiment will be provided.

The 'AV apparatus' (0200) is an AV apparatus capable of obtaining information such as a program guide digital through a network interface or a digital tuner. For example, the apparatus is a digital television.

The 'storage for information on generating program guide cells' (0201) is configured to store information on generating program guide cells, the information is for generating matrix-type cells for electronic program guide. The 'cells for electronic program guide' corresponds to cells for displaying program contents on the display screen of the AV apparatus. The program contents include information for communication of the program contents such as 'program name', 'cast', 'story' to the user. These cells are correctly arranged in a matrix on the display screen according to a time axis or a channel axis, thereby generating the electronic program guide. The shape of the generated cell is not limited, and it is preferable that the shape is rectangle for being correctly arranged in a matrix. Additionally, the size of the respective cells may be varied according to broadcasting time of the program, or all of the cells have the same size.

The 'information on generating program guide cells' is information for generating the cells in required number, varying size of the respective cells as necessary, and correctly arranging them in a matrix in accordance with a specific rule, thereby generating the frame of the electronic program guide on the display screen. Any number of cells may be arranged in a vertical/horizontal axis in the frame of the electronic program guide generated based on the information. For example, if the content of the program guide is a 'special program guide for terrestrial broadcasting', a large number of cells may be arranged according to the number of channels for terrestrial broadcasting. Moreover, if it is a 'program guide for terrestrial and satellite broadcasting', a large number of cells may be arranged according to the number of channels for terrestrial and satellite broadcasting.

The 'acquirer for image information' (0202) is configured to acquire image information. The 'image information' includes all information attached to the acquired image content such as 'time and date of the content', 'capacity of the content', 'location of shooting', and 'audio content' other than the contents of still images and moving images (hereinbelow, referred to as 'attribute information other than content'). The means for acquiring the image information by the acquirer for image information (0202) is not limited, and for example, a configuration, in which an external memory such as a SD card or a memory stick is connected to the AV apparatus, and the image information stored in such external memory is acquired, may be used. Additionally, a configuration, in which a imaging device such as a digital camera or a mobile phone having an imaging function is connected to the AV apparatus, and the image information stored in an internal memory of such imaging device is acquired, may be used. Moreover, a configuration, in which the image information already stored in an internal memory of the AV apparatus is acquired, may be used.

The 'display' (0203) is configured to display the image information acquired by the acquirer for image information (0202) on the display screen of the AV apparatus utilizing the information on generating program guide cells. In order to display the acquired image information on the display screen in an easy to grasp manner, it is preferable to display the list of the images with regularity utilizing a table. However, to newly provide the function of generating the frame such as the above table is load on the capacity etc. of the AV apparatus. Therefore, the AV apparatus of the first embodiment displays the list of image information with regularity on the display screen, so that it is possible to easily grasp the image information. Therefore, by 'utilizing the information on generating program guide cells', the display (0203) of the AV apparatus (0200) of the first embodiment is configured to display the frame, in which the cells are arranged in a matrix with regularity, on the display screen of the AV apparatus, and put the acquired image information into the cells and display them.

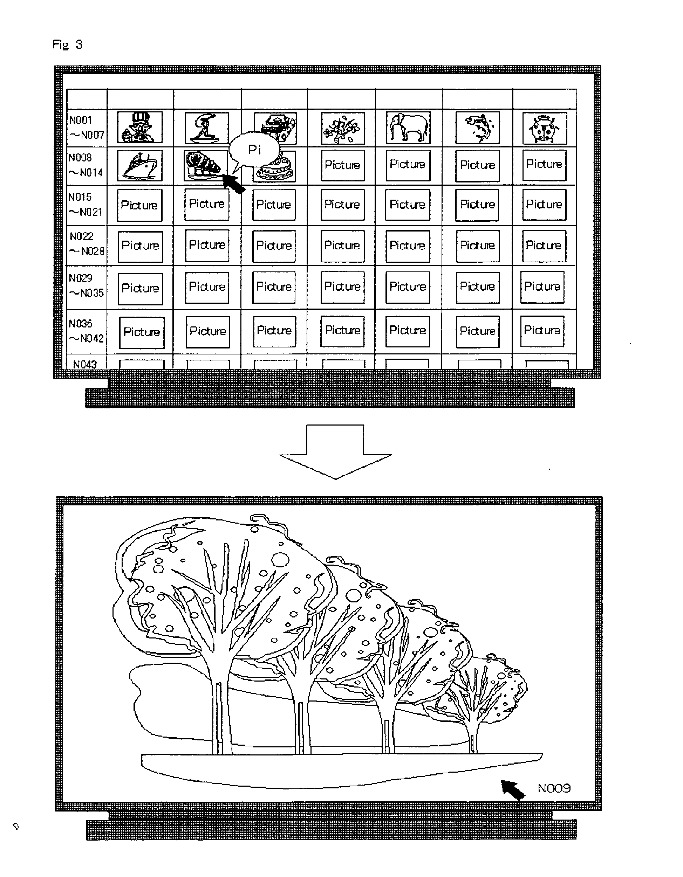

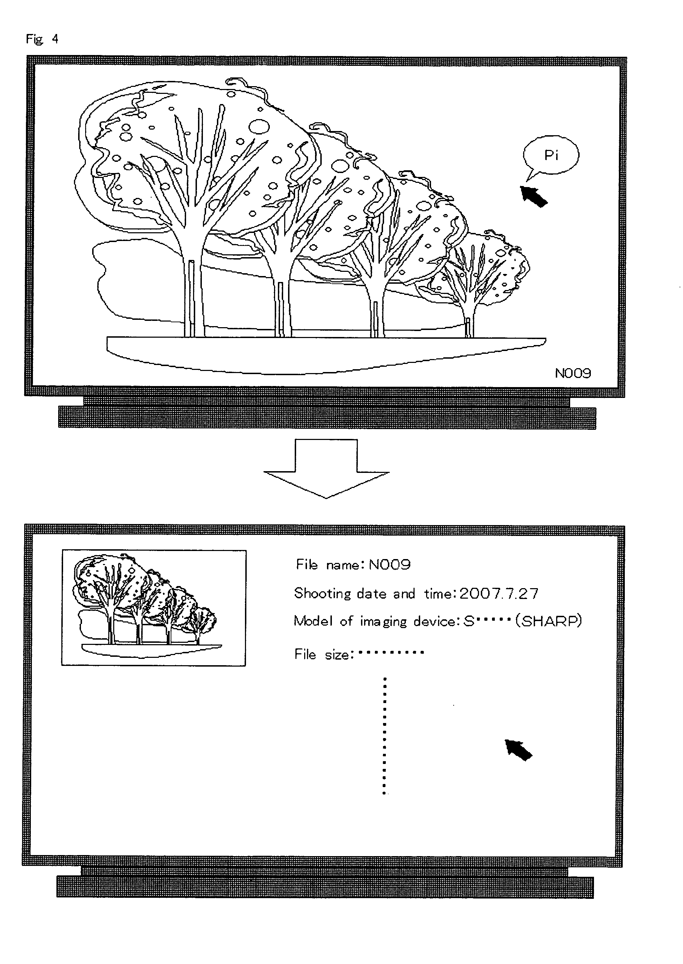

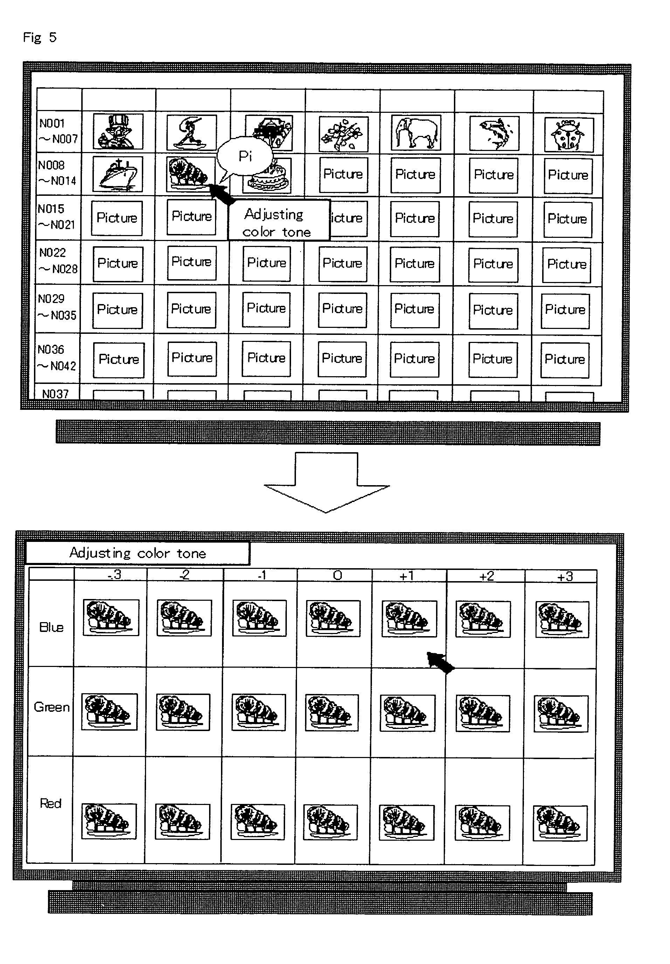

Note, that the means for displaying the image information in the cells in an easy to grasp manner is not limited, and any means may be used. For example, a configuration, in which the image content is extracted from the image information, and is reduced, thereby generating a thumbnail image, and one thumbnail image is displayed in one cell in the frame formed by arranging the cells, thereby displaying a list of thumbnail images, may be used (Fig. 3). Here, when selecting one thumbnail image and pressing an 'enter' button, only the selected image is displayed in large size on the display screen (hereinbelow, referred to as 'full-screen display', Fig. 3), and after that, when selecting the image again and pressing the 'enter' button, the attribute information other than content of the image is displayed, may be used (Fig. 4). Moreover, as shown in Fig. 5, a configuration, in which when calling a menu screen on the screen displaying the list of the thumbnail images, selecting one thumbnail image, and pressing the 'enter' button, a list of some images, whose saturation etc. are adjusted, are displayed, may be used. Additionally, a configuration, in which when selecting one image and pressing the 'enter' button, setting of color tone is varied, thereby carrying out full-screen display in the color tone of the image, may be used.

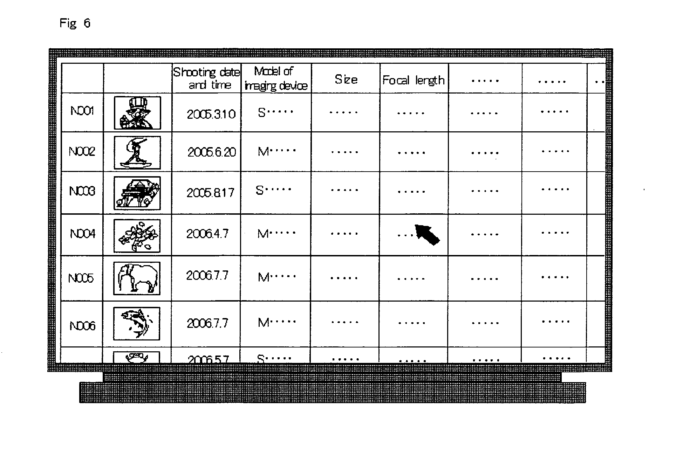

In another means as shown in Fig. 6, information in the 'attribute information other than content', which the user usually utilizes for organizing and editing image, such as items of 'shooting date and time', 'model of imaging device', 'size', and 'focal length' are put on a vertical or horizontal axis of the frame, and a list of thumbnail images is displayed in line on the other axis, and the 'attribute information other than content' of the respective images is described in the corresponding cell, thereby displaying a list of the content and the attribute information other than content. Here, the item of the 'attribute information other than content' put on the other axis may be selected by the user. Moreover, display order of the items may be selected or varied by the user.

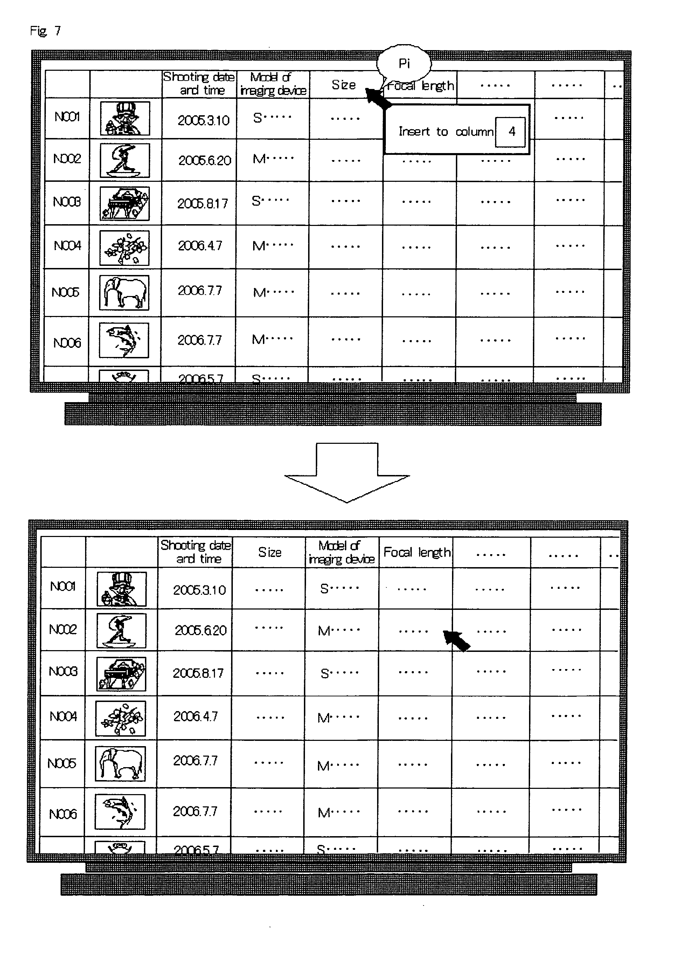

In a means for varying as shown in Fig. 7, the user selects one item and determines an order to insert the axis, thereby varying the display order of each item.

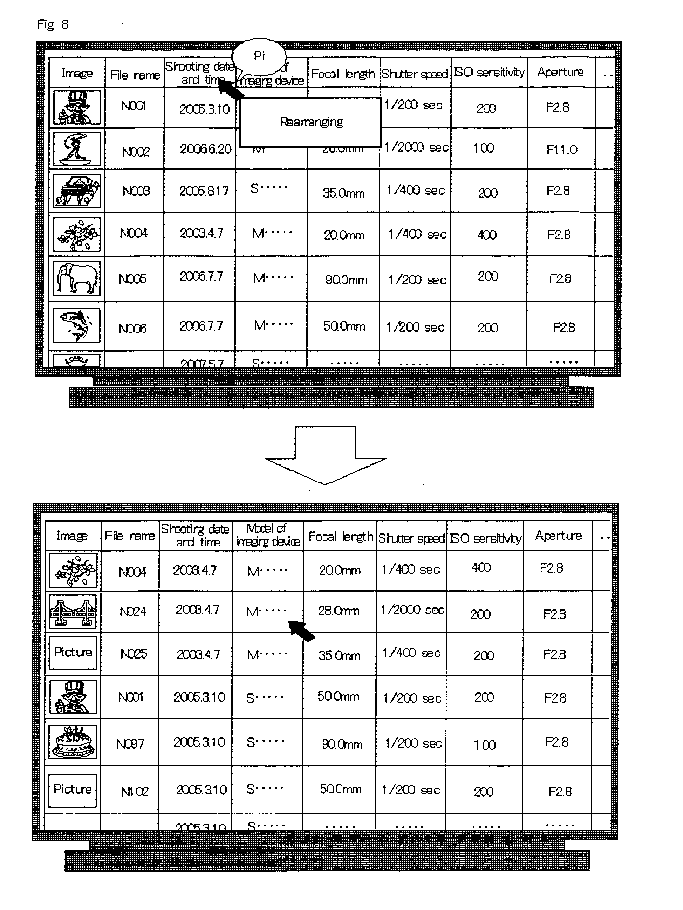

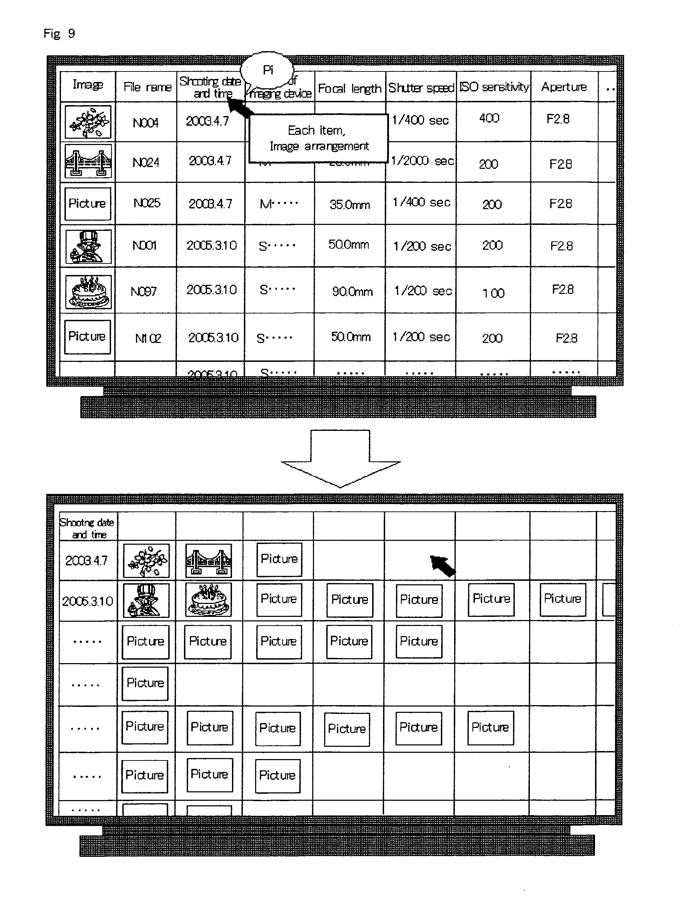

In another means as shown in Fig. 8, when the user selects the displayed item of the 'attribute information other than content' and presses the 'enter' button, according to the content of the item, the order of a plurality of image information is varied and rearranged. For example, when selecting the item of 'shooting date and time' and operating so as to rearrange the order according to the content, as shown in Fig. 8, rearrangement in chronological order of shooting date and time is carried out. Additionally, as shown in Fig. 9, according to one item, a plurality of thumbnail images may be arranged with respect to each same attribute. For example, when selecting the item of 'shooting date and time', and operating so as to arrange the thumbnail images with respect to each same content, thumbnail images having the same shooting date and time are arranged in line as shown in Fig. 9, so that it is quite useful to grasp a large number of images. Additionally, when there are some users having images, and the users took images with their own individual imaging devices, the item of 'model of imaging device' is selected, and images are arranged in line with respect to each imaging device, so that it is possible to arrange the images in line with respect to each user, and this quite useful to grasp images.

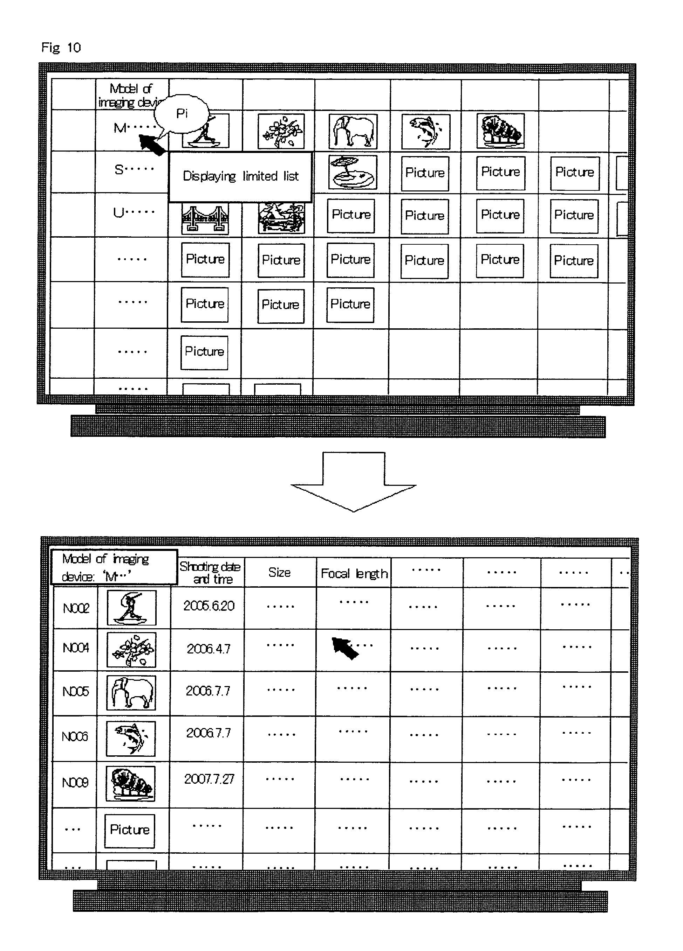

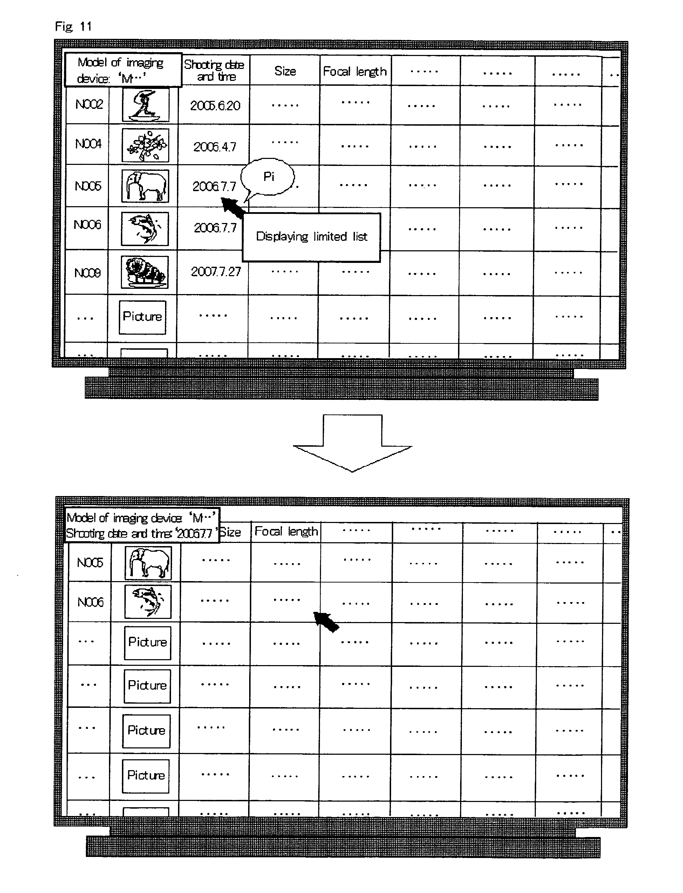

In another means as shown in Fig. 10, one element of the 'attribute information other than content' is selected, and only a list of the image information corresponding to the element is displayed. Additionally, when there are some users having images, and the users took images with their own individual imaging devices, display of a list limited to only the image information corresponding to the user's imaging device (e.g., 'M...') among the items of 'model of imaging device' may be carried out (Fig. 10). Here, a plurality of items may be selected as the limited items. For example, as shown in Fig. 11, as to the item of 'model of imaging device', the user who displays a list of image information taken by himself on the display screen, can further display a list of image information limited by the item 'shooting date and time' on the display screen.

Moreover, when there are a plurality of items of the 'attribute information other than content to be displayed, and the respective items have different volumes of information, the size of the respective cells are adjusted, thereby displaying the information in the cells in an easily viewable size.

These functions make it possible for the user to select only necessary images from a large number of images, and to display a list thereof, thereby enabling easy grasp of the images.

### <Hardware Configuration of First Embodiment>

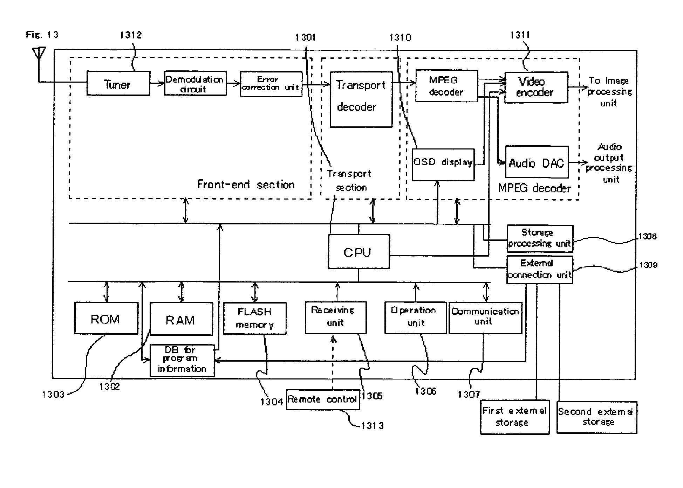

Fig. 13 is a diagram exemplifying a hardware configuration of the above functional configuration. As show in Fig. 13, the AV apparatus comprises
a 'CPU' (1301), a 'RAM' (1302), a 'ROM' (1303), a 'FLASH memory' (1304), a 'receiving unit' (1305), an 'operation unit' (1306), an 'communication unit' (1307), a 'storage processing unit' (1308), an 'external connection unit' (1309), an 'OSD display' (1310), a 'video encoder' (1311), and a 'tuner' (1312), which are for configuring the 'storage for information on generating program guide cells', the 'acquirer for image information' and the 'display'. Hereinbelow, description of implementing the first embodiment by the hardware of Fig. 13 is provided.

At the outset, when the user presses the operation button (not indicated) of a remote control (1313) or the AV apparatus in order to display the image information on the display screen, the receiving unit (1305) receives optical signals transmitted from the remote control (1313), or the CPU (1301) acquires information of this operation via the operation unit (1306). Then, in accordance with the information, the CPU (1301) acquires the image information from the ROM (1303), the FLASH memory (1304), or the external device such as a digital camera connected to the external connection unit (1309), and stores the image information in a database for program information. After that, the information on generating program guide cells is extracted from the ROM (1303), and the program guide cells are displayed on the display screen in accordance with the information, and simultaneously, the image information stored in the database for program information is extracted and displayed in the cell on the display screen.

Subsequently, the user when the user presses the operation button (not indicated) of a remote control (1313) or the AV apparatus in order to vary an order of arrangement of the image information, the CPU (1301) acquires the information via the receiving unit (1305) or the operation unit (1306), and a program for executing the process is extracted from the ROM (1303), thereby executing a predetermined process in accordance therewith.

### <Processing Flow of First Embodiment>

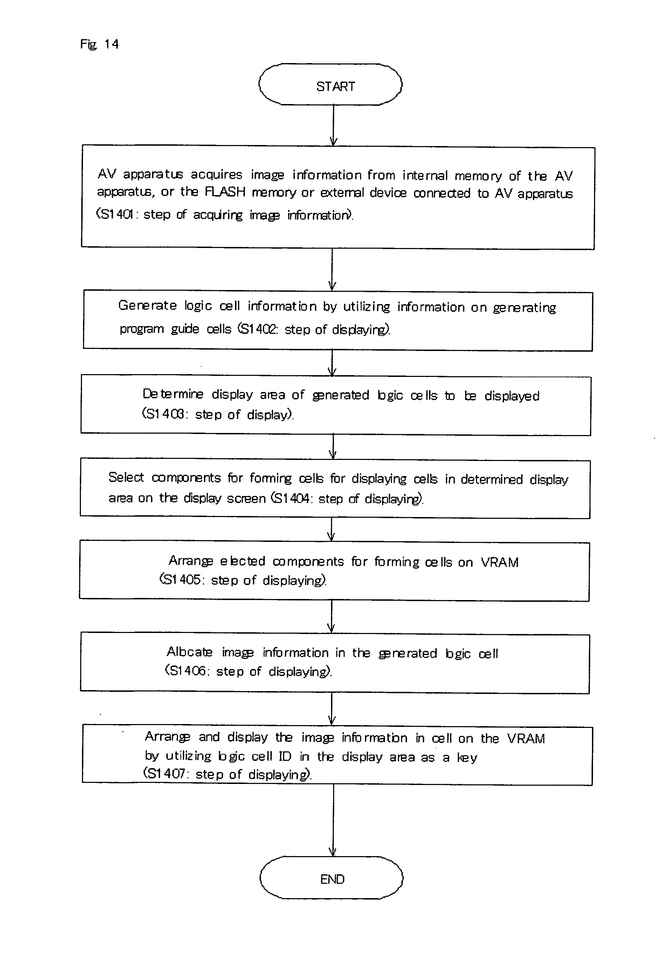

Fig. 14 is a flowchart showing processes in the first embodiment.

At the outset, the user operates the remote control etc. to operate the AV apparatus storing the information on generating program guide cells for generating matrix-type cells for electronic program guide, thereby instructing to display the image information on the display screen.

The AV apparatus acquires the image information from the internal memory of the AV apparatus, or the FLASH memory or the external device connected to the AV apparatus (S1401: step of acquiring image information).

Subsequently, by utilizing the information on generating program guide cells, logic cell information is generated (S 1402: step of display).

Subsequently, display area of the generated logic cells to be displayed is determined (S1403: step of display).

Subsequently, components for forming cells for displaying cells in the determined display area on the display screen are selected (S 1404: step of display).

After that, the selected components for forming cells are arranged on VRAM (S1405: step of display).

Subsequently, the image information is allocated in the generated logic cell (S1406: step of display).

Subsequently, by utilizing ID of the logic cell in the display area, the image information is allocated in the cell on the VRAM, and is displayed (S 1407: step of display).

### <Brief Description of Effects of First Embodiment>

According to the AV apparatus of the first embodiment, when displaying a list of various information acquired from the external memory etc. to the AV apparatus, it is possible to display the list of the still images and its attribute information, thereby enabling easy grasp of them in one glance without adding processing necessary for newly generating a frame table for displaying the list etc. and without adding capacity for a special program for the process, which increases excessive load.

### <<Second embodiment>>

### <Concept of Second Embodiment>

In the AV apparatus of a second embodiment based on the AV apparatus of the first embodiment, when organizing the images, which have been taken, the user can easily grasp the images utilizing the Exif information. Recently, the Exif information is attached to most of images taken by the digital camera or the mobile phone, and the user can check the information. The user utilizes the Exif information in various scenes, for example, in organizing the taken images. The Exif information includes various attribute information (e.g. shooting date and time, focal length, shutter speed), and by utilizing this information, it is possible to easily and efficiently grasp images, and organize them.

Therefore, in the AV apparatus of the second embodiment, when organizing the images, which have been taken, a list of the Exif information attached to the images is displayed together with the image on the display screen, so that the user can easily grasp the images.

### <Configuration of Second Embodiment>

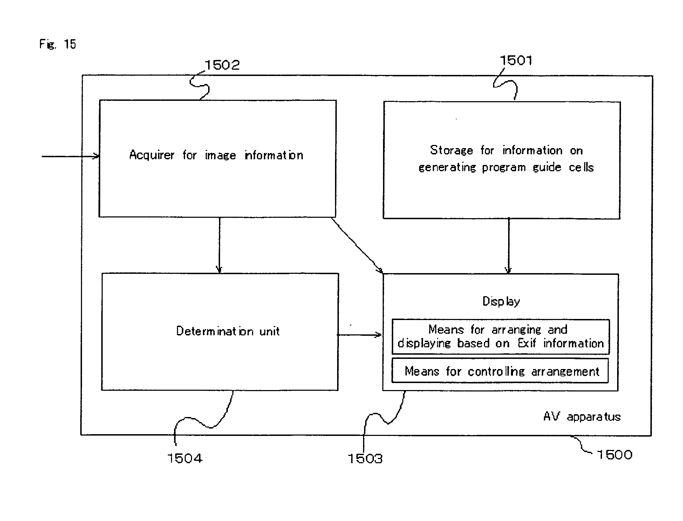

Fig. 15 is a functional block diagram of a broadcasting receiver apparatus of the second embodiment. An 'AV apparatus' (1500) of the second embodiment comprises a 'storage for information on generating program guide cells' (1501), an 'acquirer for image information' (1502), a 'display' (1503), and a 'determination unit' (1504). The 'display' (1503) comprises 'means for arranging and displaying based on Exif information'. Moreover, the 'display' (1503) may comprise 'means for controlling arrangement'.

The functional configurations of 'storage for information on generating program guide cells' (1501), and the 'acquirer for image information' (1502) are the same as those of the first embodiment, so that descriptions thereof are omitted. Hereinbelow, the functions of the 'display' (1503), and the 'determination unit' (1504) are described.

The 'determination unit' (1504) is configured to determine whether or not the acquired image information is Exif information. Here, the 'Exif information' is information, in which attribute information regarding items defined in the 'Exif standard' are described in accordance with the 'Exif standard'. The 'Exif standard' is established in order to ensure data compatibility and data exchangeability regarding the image files and voice files between cameras and peripheral devices, thereby providing user-friendly environment for many users. Examples of the 'Exif information written in Exif' include 'manufacturer's name of imaging device', 'Model of imaging device', 'focal length of lens', 'color space information', and 'shooting date and time'.

The determination as to whether or not the acquired image information is Exif information by the 'determination unit' (1504) is not limited, and for example, Exif identification code may be acquired from header information in file head.

The display (1503) is based on the first embodiment and is configured to comprise means for arranging and displaying based on Exif information, arranging and displaying a still image included in the image information and attribute information relating to the still image in cells in the same line or same column, if the determination result by the determination unit (1504) indicates the information acquired by the acquirer for image information (1502) is 'Exif file.

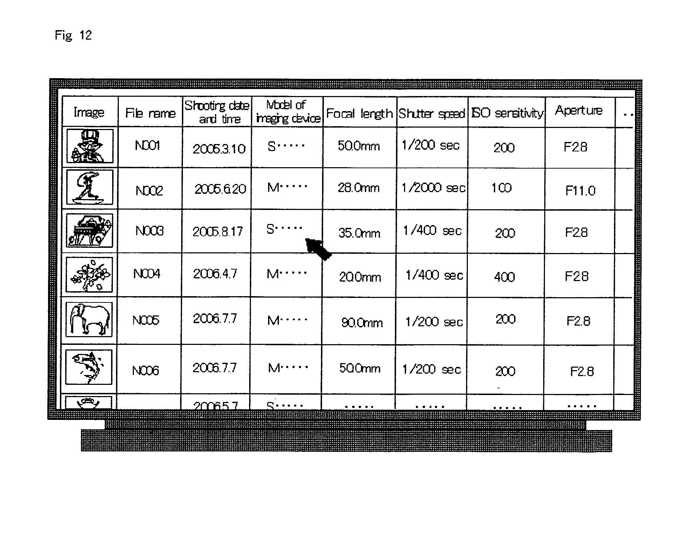

The 'still image included in the image information' is an imaged picture itself. The 'attribute information relating to still image' is information as Exif information regarding various items attached to the image, therefore, various information regarding the still image such as 'manufacturer's name of imaging device', 'Model of imaging device', 'focal length of lens', 'color space information', and 'shooting date and time'. The display (1503) is configured to arrange and display a still image included in the image information and attribute information relating to the still image in cells in the same line or same column by controlling the means for arranging and displaying based on Exif information (Fig. 12). In displaying, for example in Fig. 12, the display (1503) displays a list of still images in the leftmost column, and arranges items regarding attribute information in the Exif information in the first line from the top. Subsequently, the attribute information of the still images displayed in the leftmost column are arranged so as to correspond to the 'items regarding attribute information in the Exif information' in the first line from the top, and are displayed in a line.

Note that the list of still images may be displayed in the first line from the top, and items relating to attribute information in the Exif information may be arranged in the leftmost column. The user can select a display form from the above display forms.

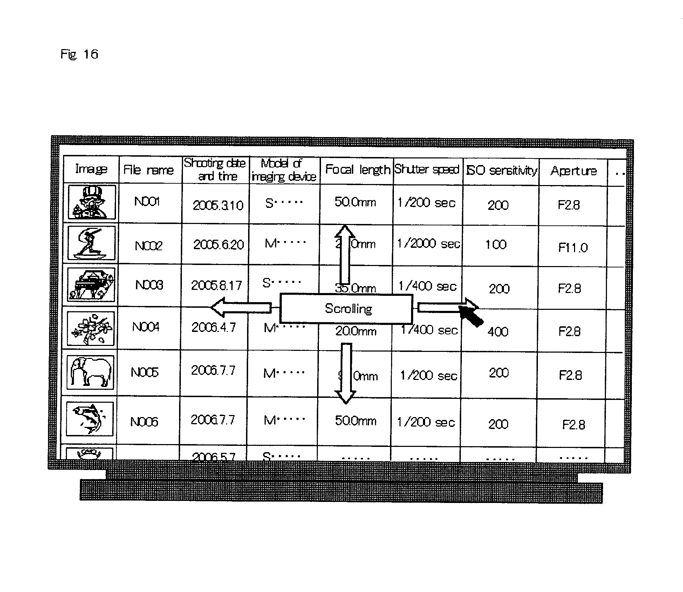

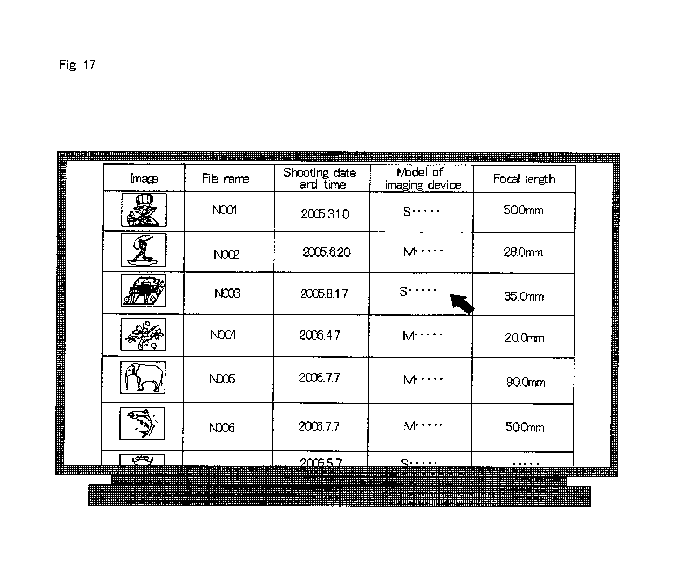

Here, there are a large number of items of the Exif information attached to the images. As shown in Fig. 16, the display (1503) may have a configuration, in which the list of the attribute information of all items is displayed, and by scrolling the screen, it is possible to browse all the attribute information However, if a large amount of attribute information is displayed on the screen at once, it takes a long time for the user to grasp the images, thereby confusing the user. Therefore, as shown in Fig. 17, the display (1503) by the 'means for arranging and displaying based on Exif information', only the necessary attribute information may be selected from a large amount of attribute information, arranged and displayed. The 'method for selecting only the necessary attribute information selected from a large number of attribute information' is not limited, and for example, the 'display' (1503) preliminarily stores a predetermined number of the items of the attribute information (e.g., 'shooting date and time' and 'model of imaging device'), which are usually used by the user, and may arrange and display the items of the attribute information based on the information. Subsequently, the attribute information of the still image may be displayed in the cell according to the arranged items of the attribute information. Moreover, the user can arbitrarily set or vary the item of the attribute information and the number of the items to be displayed.

Thus, only the still image and the attribute information in the Exif information, which are truly desired by the user, are displayed on the display screen, so that indications on the screen are simplified and the user can easily grasp the images and efficiently organize them.

The 'display' (1503) displays the still image and the attribute information relating to the still image according to the attribute included in the Exif file in an easy to grasp manner by 'the means for controlling arrangement' and displays them on the display screen by the 'means for arranging and displaying based on Exif information'. The user grasps characteristics of the still images by utilizing the attribute information of the still images on the display screen. The user organizes a plurality of images by focusing on certain attribute information among the plurality of attribute information and by grouping the still images with respect to each attribute. For example, by utilizing the attribute information of 'shooting date and time', the still images taken by the same date are organized as one group. Moreover, by utilizing the attribute information of 'model of imagining device', the still images taken by the same model of imaging device are organized as one group.

In such a case, by 'the means for controlling arrangement', the 'display' (1503) varies the arrangement of the still image and the attribute information relating to the still image displayed by the 'means for arranging and displaying based on Exif information', and displays the images, so that the user can easily organize the images.

For example, the still image and the attribute information relating to the still image are displayed by the 'means for arranging and displaying based on Exif information' of the 'display' (1503) as shown in Fig 4 upper portion. In Fig. 4 upper portion, the arrangement is done in alphabetical or numerically ascending order from the top by focusing on the 'file name' of the respective still images. When the user selects the menu 'rearranging', selects the cell including the item 'shooting date and time', and presses the button 'enter', as shown in Fig. 4 lower portion, the still image and the attribute information relating to the still image may be rearranged in chronological order of the 'shooting date and time' from the top. Moreover, as shown in Fig. 9, when the user selects the cell including the item 'shooting date and time', and presses the button 'enter', the item 'shooting date and time' is displayed in the leftmost column, and the still images taken on the same date may be displayed in the same line.

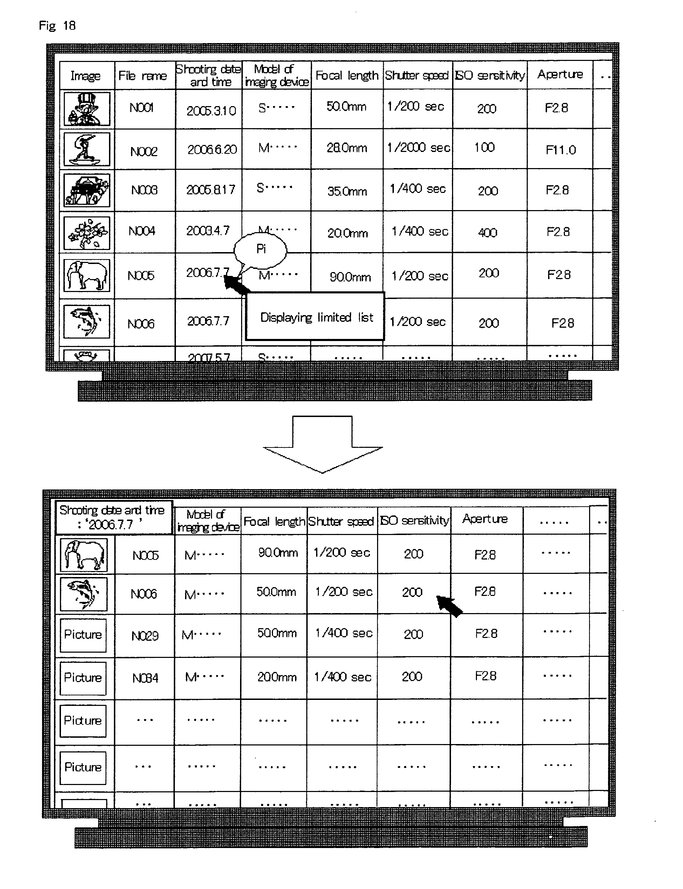

As another example of the 'means for arranging and displaying based on Exif information', as shown in Fig. 18, when the user selects the menu 'displaying limited list', selects the one attribute information (e.g., '2006.7.7' in 'shooting date and time'), and presses the button 'enter', a list of the image information corresponding to the selected attribute information may be displayed on the display screen. Moreover, in the state of Fig. 18, by selecting the other attribute information, it is possible to narrow down the image information to be displayed on the display screen.

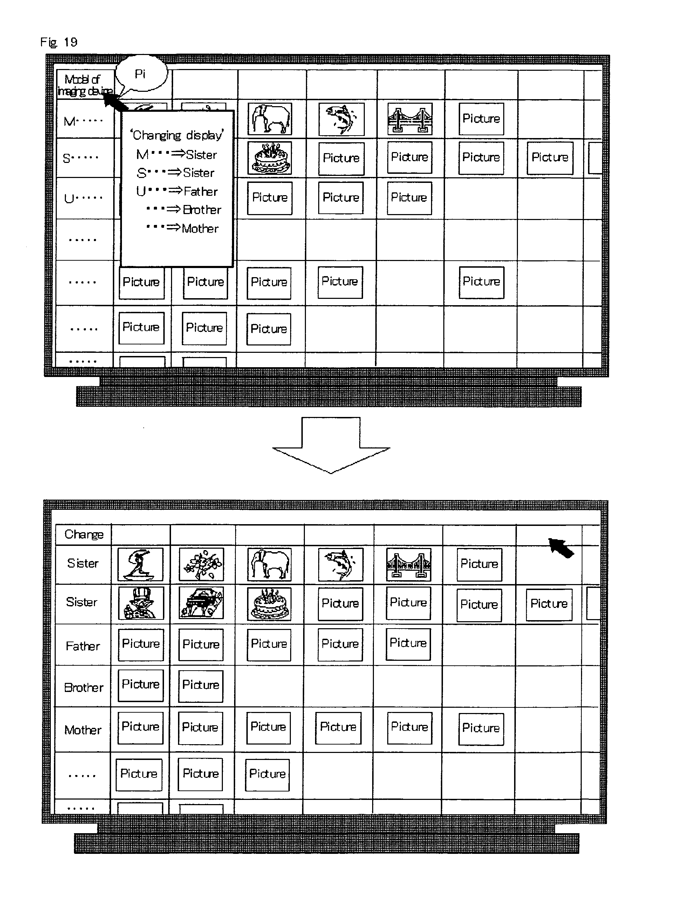

Note that the display (1503) can vary the display of the attribute information on the display screen. For example, as shown in Fig. 19, the attribute information 'model of imaging device' can be varied to 'user of imaging device' (e.g., father, mother, brother, or sister). By such function, the user can easily grasp the images by watching the indication on the display screen.

According to the above 'means for arranging and displaying based on Exif information', the user can easily grasp the still images etc.

### <Hardware Configuration of Second Embodiment>

Hereinbelow, description of means implementing the second embodiment is provided with reference to Fig. 13.

At the outset, when the user presses the operation button (not indicated) of a remote control (1313) or the AV apparatus in order to display the image information on the display screen, the receiving unit (1305) receives optical signals transmitted from the remote control (1313), or the CPU (1301) acquires information of this operation via the operation unit (1306). Then, in accordance with the information, the CPU (1301) acquires the image information from the ROM (1303), the FLASH memory (1304), or the external device such as a digital camera connected to the external connection unit (1309), and stores the image information in a database for program information. After that, the information on generating program guide cells is extracted from the ROM (1303), and the program guide cells are displayed on the display screen in accordance with the information, and simultaneously, the image information stored in the database for program information is extracted and is analyzed in the RAM (1302). If the analysis result indicates the acquired information is Exif information, a program for executing the 'means for arranging and displaying based on Exif information' is extracted from the ROM (1303), and in accordance therewith, the image information is displayed on the display screen. Specifically, for example, information relating to 'item of attribute information displayed in frame' is extracted, and the item is arranged and displayed in a line in a predetermined order in the first line from the top in the frame. Subsequently, only the attribute information corresponding to the displayed item is extracted from the attribute information included in the extracted image information, and is displayed in the cell on the display screen.

Subsequently, when the user presses the operation button of a remote control (1313) or the AV apparatus in order to vary an order of arrangement of the image information, the CPU (1301) acquires the information via the receiving unit (1305) or the operation unit (1306), and in accordance with the acquired information, a program for executing the means for controlling arrangement is extracted from the ROM (1303), thereby executing a predetermined process in accordance therewith. Then, the arrangement of cells displayed on the display screen is varied.

### <Processing Flow of Second Embodiment>

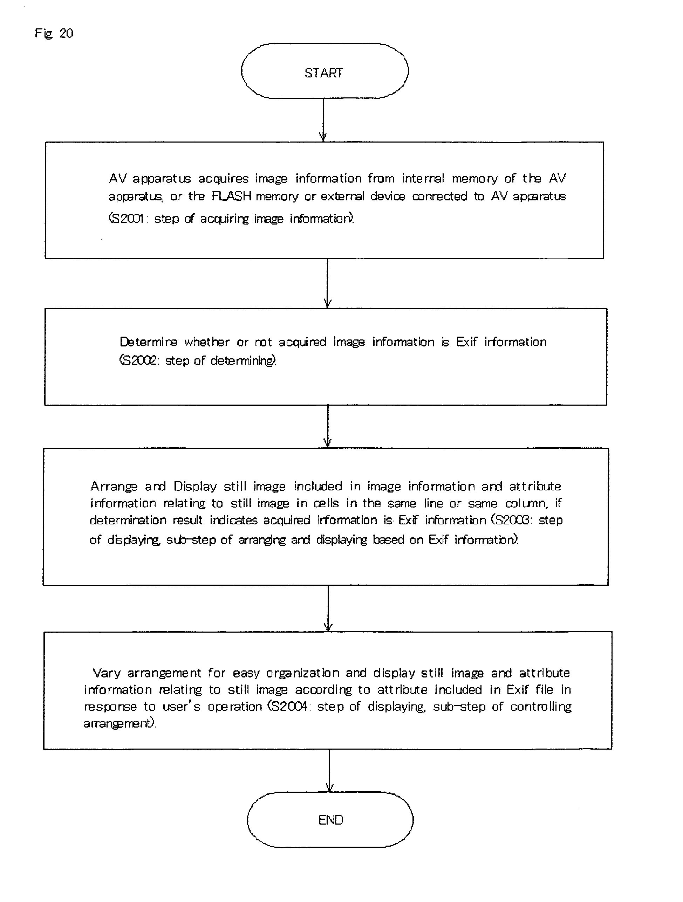

Fig. 20 is a flowchart showing processes in the second embodiment.

At the outset, the user operates the AV apparatus storing the information on generating program guide cells for generating matrix-type cells for electronic program guide, thereby instructing to display the image information on the display screen.

The AV apparatus acquires the image information from the internal memory of the AV apparatus, or the FLASH memory or the external device connected to the AV apparatus (S2001: step of acquiring image information).

Subsequently, it is determined whether or not the acquired image information is Exif information (S2002: step of determining).

Subsequently, the still image included in the image information and the attribute information relating to the still image are arranged and displayed in the cells in the same line or same column, if determination result indicates the acquired information is the Exif information (S2003: step of displaying, sub-step of arranging and displaying based on Exif information)

Subsequently, the arrangement of the still image and the attribute information relating to the still image is varied for easy organization, and the still image and the attribute information relating to the still image are displayed according to the attribute included in the Exif file in response to the user's operation (S2004: step of displaying, sub-step of controlling arrangement)

### <Brief Description of Effects of Second Embodiment>

According to the AV apparatus of in the second embodiment, it is possible to display the list of the still images and the attribute information relating to the still image without the excessive load on capacity of the AV apparatus, thereby enabling easy grasp of the images.

### «Third embodiment»

### <Concept of Third Embodiment>

The AV apparatus of a third embodiment is based on that of the second or third embodiment, and determines whether or not the acquired image information is a moving image file, and displays and arranges the moving image included in the image information and attribute information relating to the moving image in cells in the same line or same column, if the determination result indicates the acquired information is a moving image file.

Currently, various attribute information is attached to the taken moving images, and for example, 'MPEG-7' as a standard for describing contents of voice information or image information in various format is given thereto.

The AV apparatus of a third embodiment can display a list of the attribute information such as the 'MPEG-7' given to the moving image with the moving image. Therefore, it is possible to utilize the attribute information of moving images for organizing the moving images, thereby easily and efficiently grasping the images.

### <Configuration of Third Embodiment>

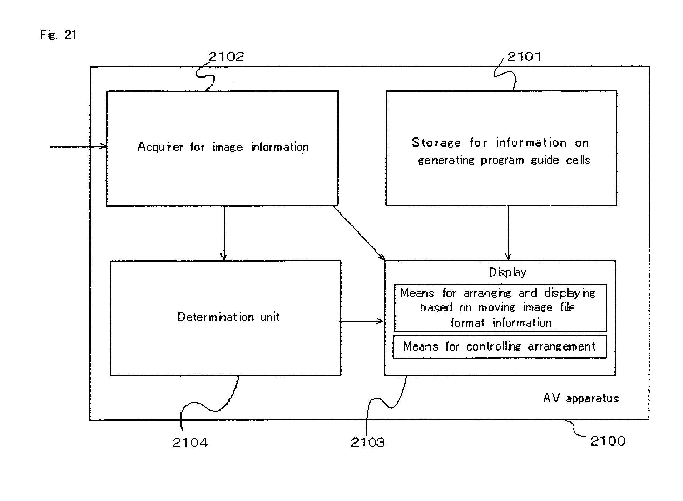

Fig. 21 is a functional block diagram of a broadcasting receiver apparatus of the third embodiment. An 'AV apparatus' (2100) of the third embodiment comprises a 'storage for information on generating program guide cells' (2101), an 'acquirer for image information' (2102), a 'display' (2103), and a 'determination unit' (2104). The 'display' (2103) comprises 'means for arranging and displaying based on moving image file'. Moreover, the 'display' (2103) may comprise 'means for controlling arrangement'.

The functional configurations of 'storage for information on generating program guide cells' (2101), and the 'acquirer for image information' (2102) are the same as those of the first embodiment, so that descriptions thereof are omitted. Hereinbelow, the functions of the 'display' (2103), and the 'determination unit' (2104) are described.

The 'determination unit' (2104) is configured to determine whether or not the acquired image information is moving image file format information. Here, the 'moving image file format information' is information described in accordance with a standard for describing information relating to moving image contents, for example, information described in accordance with the 'MPEG-7'. The moving image file format determined by the 'determination unit' (2104) is not limited to the 'MPEG-7', and any file format relating to moving image can be determined. Examples of the moving image file format information include 'title of moving image content', 'creator of moving image content', and 'required time for moving image content'.

The determination as to whether or not the acquired image information is the moving image file format information by the 'determination unit' (2104) is not limited, and for example, when the image information of 'MPEG-7' is given, the image information of 'MPEG-7' may be detected according to tag information in the file head.

The display (2103) is based on the first or second embodiment and is configured to comprise means for arranging and displaying based on moving image file, arranging and displaying a moving image included in the image information and attribute information relating to the moving image in cells in the same line or same column, if the determination result by the determination unit (2104) indicates the information acquired by the acquirer for image information (2102) is 'moving file format'.

The terms 'displaying a moving image included in the image information in cells' means that a still image included in the first scene of the moving image is displayed in a predetermined cell. Here, the display (2103) may play the moving image in full-screen when the user selects the still image in the cell and presses the 'enter' button.

The display (2103) is based on the first embodiment and is configured to comprise means for arranging and displaying based on moving image file, arranging and displaying a still image (a scene in the moving image) included in the image information and attribute information relating to the moving image in cells in the same line or same column, if the determination result by the determination unit (2104) indicates the information acquired by the acquirer for image information (2102) is 'moving file'. This configuration is implemented by replacing the 'attribute information in Exif file' in the display of the second embodiment to the 'attribute information in moving image file', so that a description is omitted.

### <Hardware Configuration of Third Embodiment>

Hereinbelow, a description of means implementing the third embodiment is provided with reference to Fig. 13.

At the outset, when the user presses the operation button (not indicated) of a remote control (1313) or the AV apparatus in order to display the image information on the display screen, the receiving unit (1305) receives optical signals transmitted from the remote control (1313), or the CPU (1301) acquires information of this operation via the operation unit (1306). Then, in accordance with the information, the CPU (1301) acquires the image information from the ROM (1303), the FLASH memory (1304), or the external device such as a digital camera connected to the external connection unit (1309), and stores the image information in a database for program information. After that, the information on generating program guide cells is extracted from the ROM (1303), and the program guide cells are displayed on the display screen in accordance with the information, and simultaneously, the image information stored in the database for program information is extracted and is analyzed in the RAM (1302). If the analysis result indicates the acquired information is moving image file format information, a program for executing the 'means for arranging and displaying based on moving image file' is extracted from the ROM (1303), and in accordance therewith, the image information is displayed on the display screen. Specifically, for example, information relating to 'item of attribute information displayed in frame' is extracted, and the item is arranged and displayed in a line in a predetermined order in the first line from the top in the frame. Subsequently, only the attribute information corresponding to the displayed item is extracted from the attribute information included in the extracted image information, and is displayed in the cell on the display screen.

Subsequently, when the user presses the operation button of a remote control (1313) or the AV apparatus in order to vary an order of arrangement of the image information, the CPU (1301) acquires the information via the receiving unit (1305) or the operation unit (1306), and in accordance with the acquired information, a program for executing the means for controlling arrangement is extracted from the ROM (1303), thereby executing a predetermined process in accordance therewith. Then, the arrangement of cells displayed on the display screen is varied.

### <Processing Flow of Third Embodiment>

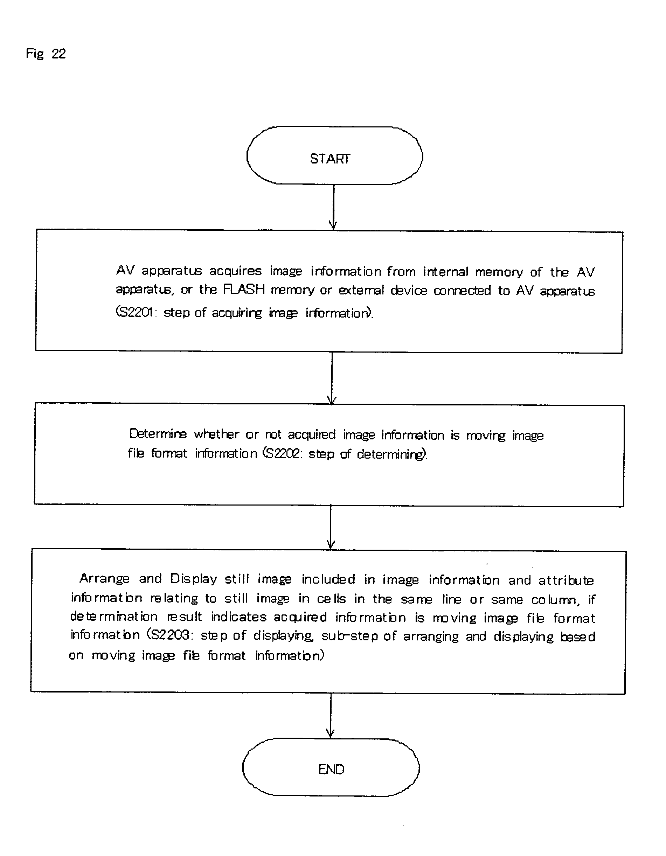

Fig. 22 is a flowchart showing processes in the third embodiment.

At the outset, the user operates the AV apparatus storing the information on generating program guide cells for generating matrix-type cells for electronic program guide, thereby instructing to display the image information on the display screen.

The AV apparatus acquires the image information from the internal memory of the AV apparatus, or the FLASH memory or the external device connected to the AV apparatus (S2201: step of acquiring image information).

Subsequently, it is determined whether or not the acquired image information is moving image file format information (S2202: step of determining).

Subsequently, the still image included in the image information and the attribute information relating to the still image are arranged and displayed in the cells in the same line or same column, if determination result indicates the acquired information is the moving image file format information (S2203: step of displaying, sub-step of arranging and displaying based on moving image file)

### <Brief Description of Effects of Third Embodiment>

According to the AV apparatus of in the third embodiment, it is possible to display the list of the moving image and the attribute information relating to the moving image without the excessive load on capacity of the AV apparatus, thereby enabling easy grasp of the images.

### «Fourth embodiment»

### <Concept of Fourth Embodiment>

In an AV apparatus of a fourth embodiment, a list of image information displayed on the display screen is scrolled by utilizing a function of scrolling the electronic program guide displayed on the display screen.

Since a large amount of information is displayed in the electronic program guide, it is difficult to display all information on one screen limited by the display screen of the AV apparatus. Therefore, generally, a function of scrolling the screen is given to the display function of the electronic program guide, and the user can scroll the screen, so that the information he desires is displayed on the screen, and he grasp the information.

Similarly, when displaying the image information on the display screen, if a large amount of image content is stored, or a list of many items of the attribute information is set to be displayed, a large amount of information is displayed on the screen, so that it is difficult to display all information on one screen limited by the display screen of the AV apparatus. Therefore, it is preferable that by a function of displaying image information on the display screen, the user can scroll the screen, so that the information he desires is displayed on the screen, and he grasp the content. However, if the function of scrolling the list of the image information displayed on the display screen is newly provided, this is load on the capacity etc. of the AV apparatus.

Therefore, in the AV apparatus of the fourth embodiment, by utilizing the function of scrolling the electronic program guide displayed on the screen, it is possible to scroll the list of the image information displayed on the display screen.

### <Configuration of Fourth Embodiment>

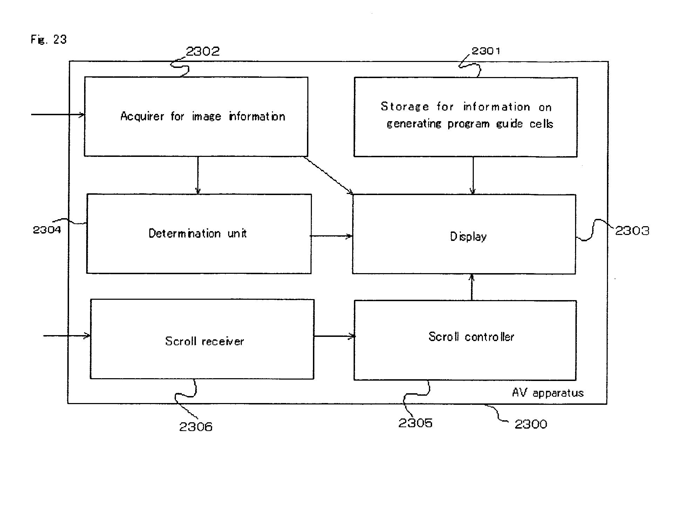

Fig. 23 is a functional block diagram of a broadcasting receiver apparatus of the fourth embodiment. An 'AV apparatus' (2300) of the fourth embodiment comprises a 'storage for information on generating program guide cells' (2301), an 'acquirer for image information' (2302), a 'display' (2303), a 'determination unit' (2304), a 'scroll controller' (2305) and a 'scroll receiver' (2306).

The functional configurations of 'storage for information on generating program guide cells' (2301), the 'acquirer for image information' (2302), the 'display' (2303), and the 'determination unit' (2304) are the same as those of the first embodiment, so that descriptions thereof are omitted. Hereinbelow, are described. Hereinbelow, the functions of the 'scroll controller' (2305) and the 'scroll receiver' (2306) are described.

The 'scroll receiver' (2306) is configured to receive input for scrolling cells including the image. The 'cells including the image' are cells displaying the image information, and these cells are arranged in a matrix with regularity on the display screen, thereby displaying the list of image information for easy grasp. When displaying the list of image information for easy grasp by utilizing the cell, if a large amount of image contents is stored, or a list of many items of the attribute information is set to be displayed, a large amount of information is displayed on the screen, so that it is difficult to display all information on one screen limited by the display screen of the AV apparatus. Therefore, in the AV apparatus (2300) of the fourth embodiment, the user can scroll the screen, so that the information he desires is displayed on the screen, and he grasp the content. When the user scrolls the cells including the image information displayed on the display screen, he input an instruction for scrolling via the operation button provided to the AV apparatus (2300) or the remote control. The scroll receiver (2306) is configured to receive the input for scrolling cells including the image inputted by the user via the remote control etc.

The 'scroll controller' is configured to control scroll of the program guide cells.

The 'program guide cells' are for displaying content of the program guide on the screen. These cells are arranged in a matrix with regularity on the display screen, thereby generating the electronic program guide on the display screen. The program guide thus generated has a large amount of information, so that it is difficult to display all information on one screen limited by the display screen of the AV apparatus. Generally, in the AV apparatus, the electronic program guide formed by the cells displaying the content of the program guide is scrolled, thereby displaying the desired information on the display screen, and the content can be grasped. Similarly, in the AV apparatus (2300) of the fourth embodiment, it is possible to scroll the electronic program guide formed by a plurality of cells, and the 'scroll controller' (2305) of the AV apparatus (2300) controls the scrolling the program guide cells. Therefore, when the 'scroll controller' (2305) is configured to scroll the program guide cells displayed on the display screen up, down, right or left in accordance with the input, when the user inputs an instruction for scrolling the program guide cells up, down, right or left using the remote control etc.

Moreover, the scroll controller (2305) is configured to control scroll of cells including the image based on the 'input for scrolling cells including the image', received by the scroll receiver (2306). Therefore, the scroll controller (2305) can scroll not only the 'cells displaying content of program' but also the 'cells displaying the image information' up, down, right or left in accordance with the user's operation using the remote control etc.

The scroll controller (2305) is originally configured to control scroll of the 'cells displaying content of program guide' on the display screen. In the AV apparatus of the fourth embodiment, the scroll controller (2305) is configured to also control scroll of the 'cells including the image', so that it is possible to scroll the image information displayed on the display screen without having unnecessary function and load on the capacity etc.

The scrolling controlled by the scroll controller (2305) is not limited. For example, the scroll controller (2305) may be configured to scroll in a vertical/horizontal direction at interval of vertical/horizontal length of one cell. Moreover, it may be configured to scroll in vertical/horizontal direction at interval of vertical/horizontal length of the display screen of the AV apparatus (2300). Furthermore, it may be configured to scroll in a vertical/horizontal direction at interval of vertical/horizontal length inputted by the user.

### <Hardware Configuration of Fourth Embodiment>

Hereinbelow, description of means implementing the fourth embodiment is provided with reference to Fig. 13.

At the outset, when the user presses the operation button (not indicated) of a remote control (1313) or the AV apparatus in order to input an instruction to scroll cells including the image displayed on the display screen. Subsequently, the CPU (1301) acquires information of this operation via the receiving unit (1305) or the operation unit (1306), and the RAM (1302) analyzes the acquired information. If the analysis result indicates the acquired information is the 'instruction to scroll cells including the image displayed on the display screen', a program for executing the scroll of the program guide cells is extracted from the ROM (1303), and in accordance therewith, a predetermined process is done on the program, thereby executing the program. Here, for example, when the 'program for executing the scroll of the program guide cells' is for separately recognizing the frame of the program guide having cells arranged in a matrix and the information relating to the content of the program displayed in the cell, and synchronizing and scrolling them, the predetermined process varies the 'identification information of the information to be synchronized with the frame' from the 'identification information relating to the content of the program' to the 'identification information relating to the image information'.

### <Processing Flow of Fourth Embodiment>

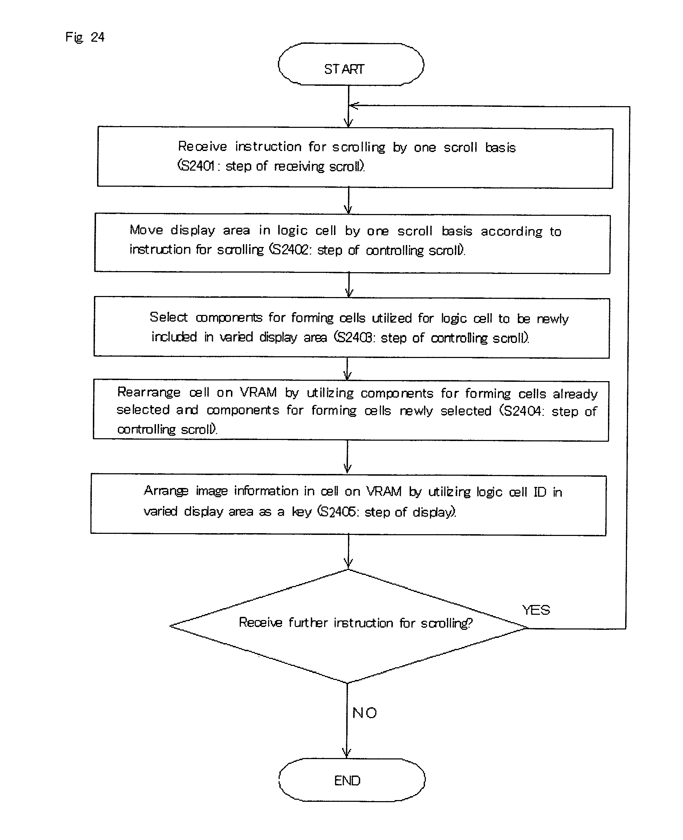

Fig. 24 is a flowchart showing processes in the fourth embodiment.

At the outset, the user operates the remote control etc., and inputs the instruction to scroll the 'cells including the image' displayed on the display screen.

The AV apparatus receives the instruction for scrolling by one scroll basis (S2401: step of receiving scroll).

Subsequently, display area in logic cell is moved by one scroll basis according to instruction for scrolling (S2402: step of controlling scroll).

Subsequently, components for forming cells utilized for logic cell to be newly included in the varied display area are selected (S2403: step of controlling scroll).

Subsequently, the cells are rearranged on VRAM by utilizing the components for forming cells already selected and the components for forming cells newly selected (S2404: step of controlling scroll).

Subsequently, the image information is arranged in the cell on the VRAM by utilizing logic cell ID in the varied display area as a key (S1407: step of display).

Subsequently, further instruction for scrolling is received as necessary.

### <Brief Description of Effects of Fourth Embodiment>

According to the AV apparatus of the fourth embodiment, it is possible to also scroll the list of the image information by utilizing the function of scrolling the preinstalled electronic program guide. Therefore, it is possible to provide the function of organizing the image information displayed on the display screen without load on the capacity etc. of the AV apparatus.

### «Fifth embodiment»

### <Concept of Fifth Embodiment>

In the AV apparatus of the fifth embodiment, when the thumbnail images are embedded in the image information in the acquired Exif file, the thumbnail images are displayed with the attribute information on the display screen.

When there are many still images, the list of the thumbnail images thereof is displayed, thereby enabling easy grasp of whole images of many still images. Examples of means for displaying the thumbnail images on the display screen include means, in which the original images are reduced in each case and displayed on the display screen (A), and means, in which reduced images as the thumbnail images are preliminarily generated and displayed (B).

In the former case of (A), since the thumbnail images are not stored, there is an advantage in the memory capacity etc. in comparison with the latter case of (B), but in the process for displaying the thumbnail images, it is necessary to generate the thumbnail images from the original images in each case, so that there is a disadvantage in processing speed. Meanwhile, in the latter case of (B), in the process for displaying the thumbnail images, it is necessary only to extract and display the preliminarily stored thumbnail images, so that there is an advantage in processing speed in comparison with the former process, but it is necessary to store many thumbnail images, and there is a disadvantage in load on the capacity of the memory.

Therefore, in the AV apparatus of the fifth embodiment, when the thumbnail image is embedded in the image information in the acquired Exif file, the list of the thumbnail images is displayed with the attribute information on the display screen. Therefore, it is possible to omit the process for extracting and reducing the original images in each case and for displaying the list thereof, thereby enabling rapid processing.

### <Configuration of Fifth Embodiment>

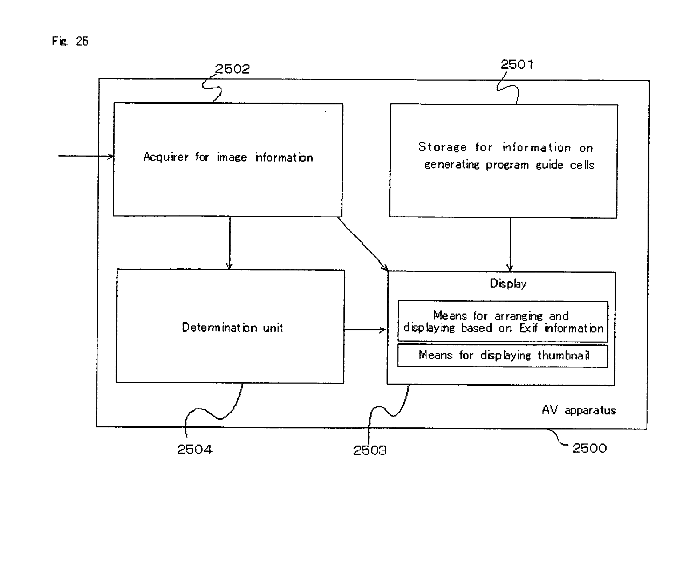

Fig. 25 is a functional block diagram of a broadcasting receiver apparatus of the fifth embodiment. An 'AV apparatus' (2500) of the fifth embodiment comprises a 'storage for information on generating program guide cells' (2501), an 'acquirer for image information' (2502), a 'display' (2503), and a 'determination unit' (2504). The 'display' (2503) comprises 'means for arranging and displaying based on Exif information', and 'means for displaying thumbnail'.

The functional configurations of 'storage for information on generating program guide cells' (2501), the 'acquirer for image information' (2502), and the 'determination unit' (1504) are the same as those of the first embodiment, so that descriptions thereof are omitted. Hereinbelow, the function of the 'display' (2503) is described.

The 'display' (2503) is configured to comprise means for displaying thumbnail, arranging and displaying a thumbnail included in the image information in the cell, if the determination result indicates the acquired information is 'Exif information'. The Exif image information is, as described in the second embodiment, description of a large amount of attribute information relating to the still images, and there is a case that the thumbnail images are embedded therein.

The 'display' (2503) of the 'AV apparatus' (2500) of the fifth embodiment is configured to display a list of the thumbnail images and the attribute information of the acquired image information on the display screen by utilizing the cells in the electronic program guide. In the means for displaying the thumbnail images, the original images are extracted from the image information, and are reduced, thereby generating and displaying the thumbnail images. However, in such case, the original images having a large file size is extracted and processed, so that it requires long time to display the list on the display screen. The 'display' (2503) of the fifth embodiment is configured to comprise the 'means for displaying thumbnail' arranging and displaying the thumbnail image in the cell, if the determination result indicates the thumbnail image is included in the Exif information.

Therefore, if the determination result indicates the thumbnail image is included in the acquired image information, only the Exif information is to be extracted from the image information and displayed. Therefore, it is unnecessary to carry out the reduction of the original image having a large file size, so that it is possible to display a list of the thumbnail images and the attribute information of the acquired image information on the display screen without loss of time.

Moreover, when the thumbnail image is not included in the Exif information, it is possible to extract the original image and to generate the thumbnail image, or to create a blank space in the cell for displaying the thumbnail image.

### <Hardware Configuration of Fifth Embodiment>

Hereinbelow, description of means implementing the fifth embodiment is provided with reference to Fig. 13.

At the outset, when the user presses the operation button of a remote control (1313) or the AV apparatus in order to display the image information on the display screen, the receiving unit (1305) receives optical signals transmitted from the remote control (1313), or the CPU (1301) acquires information of this operation via the operation unit (1306). Then, in accordance with the information, the CPU (1301) acquires the image information from the ROM (1303), the FLASH memory (1304), or the external device such as a digital camera connected to the external connection unit (1309), and stores the image information in a database for program information. After that, the information on generating program guide cells is extracted from the ROM (1303), and the program guide cells are displayed on the display screen in accordance with the information, and simultaneously, the image information stored in the database for program information is extracted and is analyzed in the RAM (1302). If the analysis result indicates that the image information is Exif information, the thumbnail images are extracted from the information. Subsequently, a program for executing the 'means for displaying thumbnail' is extracted from the ROM (1303), and in accordance therewith, the thumbnail information extracted from the Exif information are displayed in the cells on the display screen. Moreover, the program for executing the 'means for arranging and displaying based on Exif information' is extracted from the ROM (1303), and in accordance therewith, the image information is displayed in the cells on the display screen.

### <Processing Flow of Fifth Embodiment>

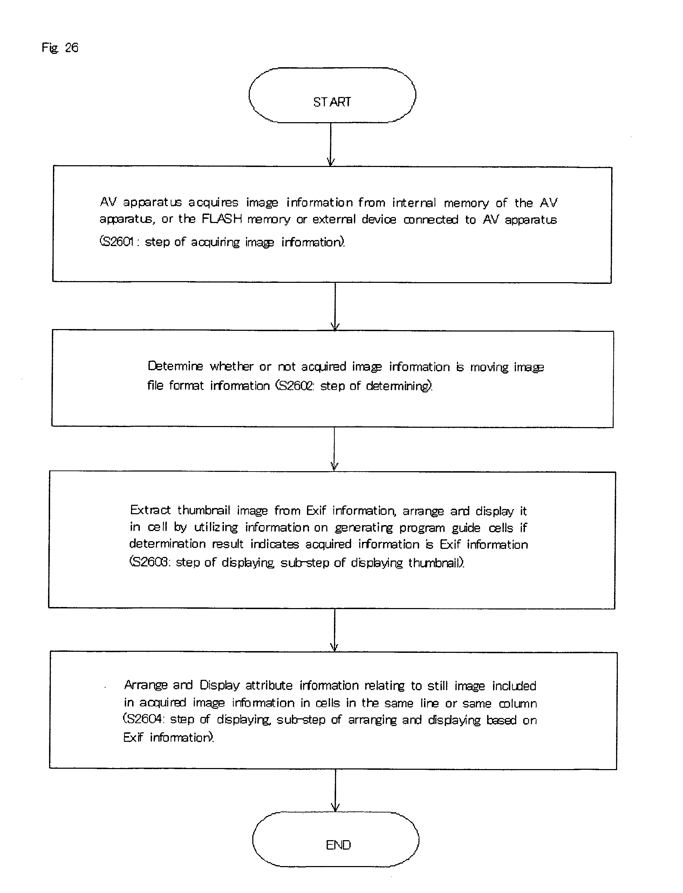

Fig. 26 is a flowchart showing processes in the fifth embodiment.

At the outset, the user operates the AV apparatus storing the information on generating program guide cells for generating matrix-type cells for electronic program guide, thereby instructing to display the image information on the display screen.

The AV apparatus acquires the image information from the internal memory of the AV apparatus, or the FLASH memory or the external device connected to the AV apparatus (S2601: step of acquiring image information).

Subsequently, it is determined whether or not the acquired image information is Exif information (S2602: step of determining).

Subsequently, the thumbnail image is extracted from Exif information, arranged and displayed in cell by utilizing information on generating program guide cells if determination result indicates acquired information is Exif information (S2603: step of displaying, sub-step of displaying thumbnail)

Subsequently, the attribute information relating to still image included in acquired image information is arranged and displayed in cells in the same line or same column (S2604: step of displaying, sub-step of arranging and displaying based on Exif information)

### <Brief Description of Effects of Fifth Embodiment>

According to the AV apparatus of in the fifth embodiment, it is possible to rapidly display the list of the image information without the excessive load on data processing in the AV apparatus, thereby enabling easy organization and easy edition of the image information.

### <<Sixth embodiment>>

### <Concept of Sixth Embodiment>

The AV apparatus of the sixth embodiment is provided with an 'image viewer' for efficiently grasping the imaged still images. It is possible to display the acquired program information utilizing the information on generating cells for image viewer.

Recent AV apparatus has the large and high-definition screen, and is suitable for displaying the images taken by a digital camera etc, so that it is easy to grasp the images. However, when newly installing all of the 'matrix-type cells for displaying images for easy grasp thereof' and 'functions of organizing the displayed images' etc, this causes excessive load on the storage capacity etc. of the AV apparatus.

Therefore, in the AV apparatus of the sixth embodiment, the 'image viewer' having the 'matrix-type cells for displaying an electronic program guide' and the 'function of organizing the displayed images' etc. is newly provided, thereby easily grasping the images. Among the functions already provided, functions can be implemented by utilizing the image viewer are implemented by the image viewer, and unnecessary functions are removed from the AV apparatus.

According to this, it is possible to efficiently grasp the still images by utilizing the image viewer, and to avoid excessive load on the storage capacity etc. of the AV apparatus.

### <Configuration of Sixth Embodiment>

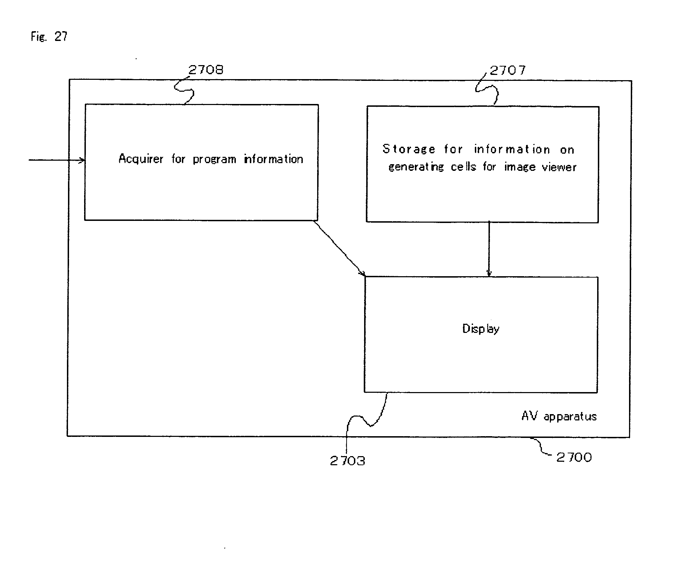

Fig. 27 is a functional block diagram of a broadcasting receiver apparatus of the sixth embodiment. An 'AV apparatus' (2700) of the sixth embodiment comprises a 'storage for information on generating cells for image viewer' (2707), an 'acquirer for program information' (2708), and a 'display' (2703). Hereinbelow, these functions are described.

The 'storage for information on generating cells for image viewer' (2701) is configured to store information on generating cells for image viewer for generating matrix-type cells for the image viewer. The 'cells for image viewer' are cells for displaying the still images and the attribute information included in the image information on the display screen of the AV apparatus in a manner of easy organization. These cells are arranged in a matrix with regularity and the list thereof is displayed, so that the user can easily grasp and organize the image information. The shape of the generated cell is not limited, and it is preferable that the shape is rectangular for being correctly arranged in a matrix. Additionally, the size of the respective cells may be varied according to the amount of attribute information to be displayed, or all of the cells have the same size.

The 'information on generating cells for image viewer' is information for generating required number of cells, varying size of the respective cells, and correctly arranging the cells in a matrix in accordance with a specific rule, thereby generating the frame for displaying a list of the image information on the display screen.

The 'acquirer for program information' (2708) is configured to acquire the program information of EPG (electronic program guide). The 'program information of EPG (electronic program guide)' is information for indicating the content (e.g., channel, broadcasting time, content, and cast) of the program guide displayed on the display screen. The AV apparatus (2700) acquires the program information of the EPG, inserts the information into the frame of the electronic program guide preliminarily stored in the AV apparatus, thereby displaying the electronic program guide on the display screen. The means for acquiring the program information of the EPG by the acquirer for program information (2708) is not limited, and the information may be acquired from a digital tuner or from the Web.

The 'storage for information on generating cells for image viewer' (2707) is configured to display the program information acquired by the acquirer for program information (2708) by utilizing the information on generating cells for image viewer on the display screen of the AV apparatus. When irregularly displaying the acquired program information on the display screen, it is difficult for the user to grasp the information, thereby causing inconvenience. It is preferable that the list of the acquired program information is displayed on the display screen of the AV apparatus with regularity, so that the program information is easily grasped. Therefore, by utilizing the information on generating cells for image viewer, the AV apparatus of the sixth embodiment displays the listing of the program information with regularity on the display screen of the AV apparatus. Therefore, by 'utilizing the information on generating cells for image viewer', the display (2703) of the AV apparatus (2700) of the sixth embodiment is configured to display the listing, in which the cells are arranged in a matrix with regularity, on the display screen of the AV apparatus, and put the acquired program information into the cells and display them.

According to the above function of the display (2703), in the 'AV apparatus' (2700) of the sixth embodiment, the frame for displaying the program information of the AV apparatus of the first embodiment is unnecessary. Therefore, the functions such as the 'means for generating cells for electronic program guide' and 'means for cells for displaying electronic program guide' are unnecessary. Therefore, the 'AV apparatus' (2700) of the sixth embodiment does not have such unnecessary functions. This enables reduction of the load on the capacity etc. of the 'AV apparatus' (2700).

Moreover, the electronic program guide displayed on the display screen using the cells for image viewer may be organized by utilizing the function of organization given to the image viewer, so that the user can easily grasp.

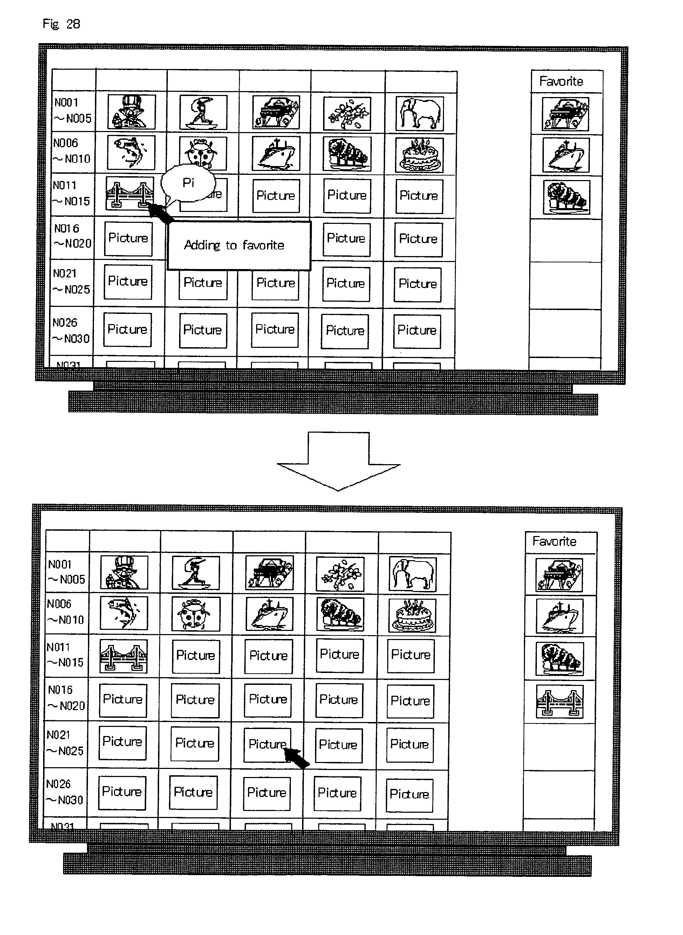

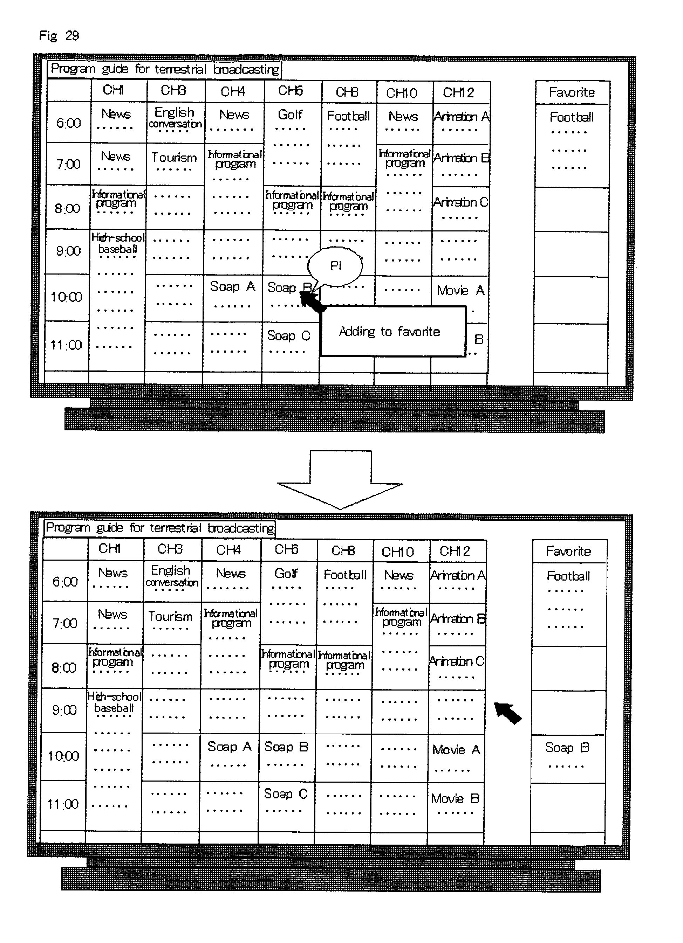

For example, as shown in Fig. 28, it is assumed the function of selecting favorite images from the thumbnail images, whose list is displayed on the image viewer, and displaying them in a separated frame for organization is provided. When displaying the electronic program guide on the display screen utilizing the cells for image viewer, as shown in Fig 29, the user can select the program information to be watched or recorded, and instruct to display them in the separated frame.

In another example, the image viewer displays the list of still images of one scene in the moving image in the cells, and when selecting a still image and pressing the 'enter' button, play back of the moving image thereof starts. In this case of displaying the electronic program guide on the display screen utilizing the cells for image viewer, moving image of a trailer may be included in the 'program information of EPG'. In this case, a still image for guiding the moving image trailer of the program is displayed in the cell, and when the user selects the still image and presses the 'enter' button, play back of the moving image trailer of the program starts. In this case, the play may be carried out in full-screen display, or the user may select the screen size.

In another example, by utilizing the image viewer, the past program guide can be viewed. In such case, when recording a certain program and storing it in the internal memory of the AV apparatus, when the user selects the cell indicating the program information of the recorded program from the past program guide, and presses the 'enter' button, play back of the recorded program starts.

As described above, when displaying the electronic program guide on the display screen utilizing the cells for image viewer, it is possible to efficiently grasp the content of the program information, thereby improving user-friendliness of the program guide.

### <Hardware Configuration of Sixth Embodiment>

Hereinbelow, description of means implementing the sixth embodiment is provided with reference to Fig. 13.

At the outset, when the user presses the operation button of a remote control (1313) or the AV apparatus in order to display the electronic program guide on the display screen, the CPU (1301) acquires information via the receiving unit (1305), or the operation unit (1306). Then, in accordance with the information, the CPU (1301) acquires the program information via the tuner (1312) or the communication unit (1307). Subsequently, the information on generating cells for image viewer is extracted from the ROM (1303), and in accordance therewith, the cells for image viewer are displayed on the display screen.

Subsequently, identification information of time or channel is given to the vertical or horizontal axis of the cell arranged in a matrix. Subsequently, the identification information of time and channel, described in the acquired program information, is respectively identified, and displayed in the cell corresponding to the identification information of time axis or channel axis.

### <Processing Flow of Sixth Embodiment>

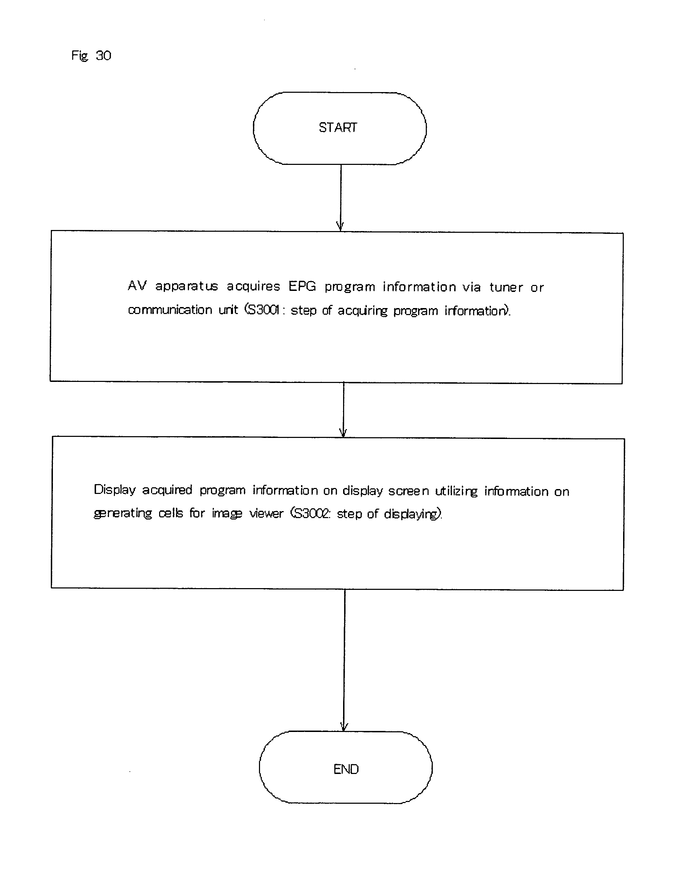

Fig. 30 is a flowchart showing processes in the sixth embodiment.

At the outset, the user operates the AV apparatus storing the information on generating cells for image viewer for generating matrix-type cells for image viewer, thereby instructing to display the electronic program guide on the display screen.

Subsequently, the AV apparatus acquires EPG program information via the tuner or the communication unit (S3001: step of acquiring program information)

Subsequently, the acquired program information is displayed on the display screen utilizing the information on generating cells for image viewer (S3002: step of displaying)

### <Brief Description of Effects of Sixth Embodiment>

According to the AV apparatus of in the sixth embodiment, it is possible to display the list of the image information in an easy to grasp manner without the excessive load on capacity of the AV apparatus. Moreover, it is possible for the user to organize the electronic program guide displayed on the display screen of the AV apparatus for easy grasp.

### <<Seventh embodiment>>

### <Concept of Seventh Embodiment>

In the AV apparatus of in the seventh embodiment based on the AV apparatus of in the sixth embodiment, the image information and the program information, which are displayed in the cells for image viewer, are displayed in full-color on the display screen by utilizing the color data used for displaying color pictures.

Therefore, the electronic program guide displayed on the display screen of the AV apparatus of in the seventh embodiment can be displayed in a large variety of colors, and the user can easily grasp the program information.

### <Configuration of Seventh Embodiment>

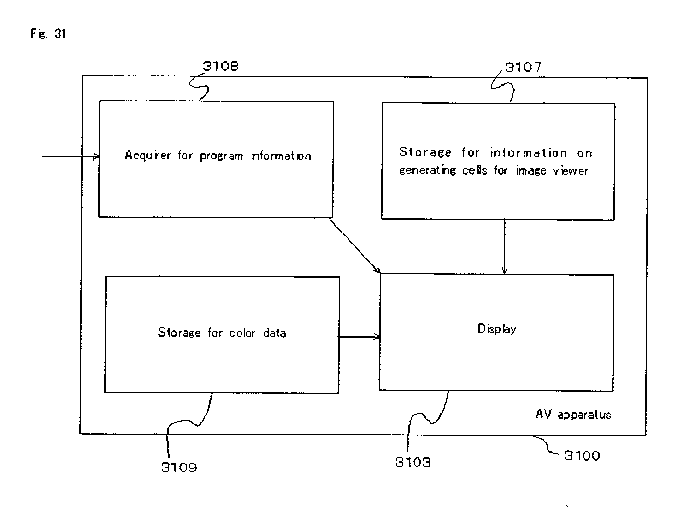

Fig. 31 is a functional block diagram of a broadcasting receiver apparatus of the seventh embodiment. An 'AV apparatus' (3100) of the seventh embodiment comprises a 'storage for information on generating cells for image viewer' (3107), an 'acquirer for program information' (3108), a 'display' (3103), and a 'storage for color data' (3109).

The functional configurations of the 'storage for information on generating cells for image viewer' (3107), and the 'acquirer for program information' (3108) are the same as those of the sixth embodiment, so that descriptions thereof are omitted. Hereinbelow, the functions of the 'display' (3103) and the 'storage for color data' (3109) are described.

The 'storage for color data' is configured to store the color data for displaying color picture.

The AV apparatus of in the seventh embodiment can display the program contents and the image contents in a large variety of colors on the display screen, the user can enjoy them. The method for carrying out display in a large variety of colors by the 'AV apparatus' (3100) of the seventh embodiment is not limited, and any color space such as 'RGB', 'RGBA', or 'YCbCr' may be used. The 'the color data for displaying color picture' is data for segmentation of the color expressed by using the above color space, and for carrying out display a large variety of colors. Specifically, in the case of using the 'RGB' color space, the color is expressed by mixture of 'Red', 'Blue', and 'Green', and by adjusting color intensity of each color, it is possible to express a large variety of colors. Currently, it is possible to adjust each color by 256 level of intensity, thereby expressing colors up to 16,777,216 colors. The 'color data for displaying color picture' is data for displaying colors of images displayed on the display screen up to 16,777,216 colors.

The 'information on generating cells for image viewer' is configured for utilizing the color data for displaying color picture in the respective cells. Therefore, the information on generating cells for image viewer is configured to display the image information and the program information displayed in the respective cells in full-color by utilizing the color data for displaying color picture.

The information on generating cells for image viewer of the seventh embodiment includes information for generating definition for displaying the content in the generated cell other than the information for generating cells and arranging them in a matrix with regularity. Specifically, 'position in the cell', 'character size', 'font type of character', and 'color display method' etc. of the content displayed in the cell are defined.

Therefore, the information on generating cells for image viewer of the seventh embodiment is configured for definition of 'displaying by utilizing the color data for displaying color picture' in the 'color display method' for the content displayed in the cell.

Therefore, by utilizing the information on generating cells for image viewer, the display (3103) of the seventh embodiment is configured to display also the program information in full-color in accordance with the definition generated based on the information on generating cells for image viewer. Therefore, it is possible to display the program information in a large variety of colors, so that the user can easily grasp the content of the program guide.

### <Hardware Configuration of Seventh Embodiment>

Hereinbelow, description of means implementing the seventh embodiment is provided with reference to Fig. 13.

At the outset, when the user presses the operation button of a remote control (1313) or the AV apparatus in order to display the electronic program guide on the display screen, the CPU (1301) acquires information via the receiving unit (1305), or the operation unit (1306). Then, in accordance with the information, the CPU (1301) acquires the program information via the tuner (1312) or the communication unit (1307). Subsequently, the information on generating cells for image viewer is extracted from the ROM (1303), and in accordance therewith, the cells for image viewer are displayed on the display screen. Subsequently, identification information of time or channel is given to the vertical or horizontal axis of the cell arranged in a matrix. Subsequently, the identification information of time and channel, described in the acquired program information, are respectively identified, and displayed in the cell corresponding to the identification information of time axis or channel axis. Here, in accordance with the definition of the content in the cell, generated based on the information on generating cells for image viewer, the program information is displayed. For example, when it is defined in the color display method for the color of the content that the color data for displaying color picture is used, the CPU (1301) displays the content on the display screen in full-color by using the color data for displaying color picture.

### <Processing Flow of Seventh Embodiment>

Fig. 30 is a flowchart showing processes in the seventh embodiment.

At the outset, the user operates the AV apparatus storing the information on generating cells for image viewer for generating matrix-type cells for image viewer, thereby instructing to display the electronic program guide on the display screen.

Subsequently, the AV apparatus acquires EPG program information via the tuner or the communication unit (S3001: step of acquiring program information)

Subsequently, in accordance with the definition of the content in the cell, generated based on the information on generating cells for image viewer, the acquired program information on the display screen utilizing the information on generating cells for image viewer (S3002: step of displaying)

When the definition in the content in the cell indicates that the color data for displaying color picture is used for displaying the content, in accordance therewith, the content is displayed in full-color.

### <Brief Description of Effects of Seventh Embodiment>

According to the AV apparatus of in the seventh embodiment, it is possible to display the list of the image information in an easy to grasp manner without the excessive load on capacity of the AV apparatus. Moreover, it is possible to display the electronic program guide in full-color on the display screen of the AV apparatus, so that the user can easily grasp the content of the electronic program guide.

### BRIEF DESCRIPTION OF THE DRAWINGS

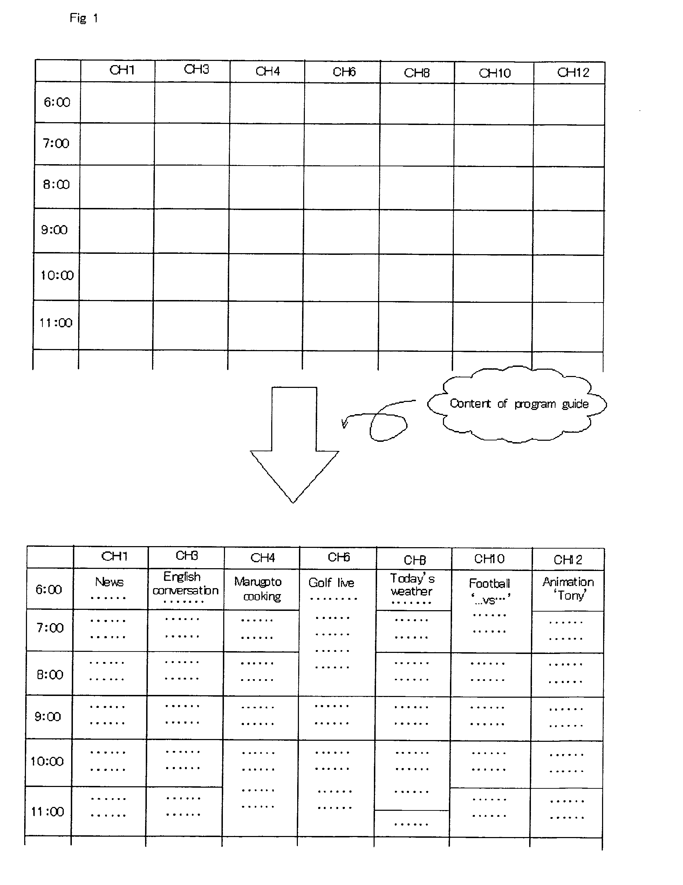

Fig. 1 is a conceptual diagram exemplifying a method for displaying EPG on a display screen.
Fig. 2 is a functional block diagram of a first embodiment.
Fig. 3 is a conceptual diagram 1 showing effects of the first embodiment.
Fig. 4 is a conceptual diagram 2 showing effects of the first embodiment.
Fig. 5 is a conceptual diagram 3 showing effects of the first embodiment.
Fig. 6 is a conceptual diagram 4 showing effects of the first embodiment.
Fig. 7 is a conceptual diagram 5 showing effects of the first embodiment.
Fig. 8 is a conceptual diagram 1 showing effects of the first and a second embodiments.
Fig. 9 is a conceptual diagram 1 showing effects of the first and the second embodiments.
Fig. 10 is a conceptual diagram 6 showing effects of the first embodiment.
Fig. 11 is a conceptual diagram 7 showing effects of the first embodiment.
Fig. 12 is a conceptual diagram 1 showing effects of the second embodiment.
Fig. 13 is a diagram exemplifying a hardware configuration of an AV apparatus.
Fig. 14 is a flowchart showing processes in the first embodiment.
Fig. 15 is a functional block diagram of the second embodiment.
Fig. 16 is a conceptual diagram 2 showing effects of the second embodiment.
Fig. 17 is a conceptual diagram 3 showing effects of the second embodiment.
Fig. 18 is a conceptual diagram 4 showing effects of the second embodiment.
Fig. 19 is a conceptual diagram 5 showing effects of the second embodiment.
Fig. 20 is a flowchart showing processes in the second embodiment.
Fig. 21 is a functional block diagram of a third embodiment.
Fig. 22 is a flowchart showing processes in the third embodiment.
Fig. 23 is a functional block diagram of a fourth embodiment.
Fig. 24 is a flowchart showing processes in the fourth embodiment.
Fig. 25 is a functional block diagram of a fifth embodiment.
Fig. 26 is a flowchart showing processes in the fifth embodiment.
Fig. 27 is a functional block diagram of a sixth embodiment.
Fig. 28 is a conceptual diagram 1 showing effects of the sixth embodiment.
Fig. 29 is a conceptual diagram 2 showing effects of the sixth embodiment.
Fig. 30 is a flowchart showing processes in the sixth and seventh embodiments.
Fig. 31 is a functional block diagram of the seventh embodiment.

### Description of Reference Numerals

1301 CPU
1302 RAM
1303 ROM
1304 FLASH memory
1305 Receiving unit
1306 Operation unit
1307 Communication unit
1308 Storage processing unit
1309 External connection unit
1310 OSD display
1311 Video encoder

## Claims

1. An AV apparatus, comprising:
a storage for information on generating program guide cells, storing information on generating program guide cells, the information is for generating matrix-type cells for electronic program guide;
an acquirer for image information, acquiring image information; and
a display, displaying the acquired image information utilizing the information on generating program guide cells.

2. The AV apparatus according to Claim 1, comprising:
a determination unit, determining whether or not the acquired image information is Exif information,
wherein the display comprises
means for arranging and displaying based on Exif information, arranging and displaying a still image included in the image information and attribute information relating to the still image in cells in the same line or same column, if the determination result indicates the acquired information is Exif information.

3. The AV apparatus according to Claim 2,
wherein the display comprises
means for controlling arrangement, controlling the means for arranging and displaying based on Exif information to arrange the still image and the attribute information relating to the still image according to the attribute included in the Exif file.

4. The AV apparatus according to Claim 2 or 3,
wherein the Exif file is substituted with a moving image file.

5. The AV apparatus according to any one of Claims 1 to 4, comprising:
a scroll controller, controlling scroll of the program guide cells; and
a scroll receiver, receiving input for scrolling cells including the image,
wherein the scroll controller controls scroll of cells including the image based on the input for scrolling cells including the image, received by the scroll receiver.

6. The AV apparatus according to Claim 2, wherein
the display comprises
means for displaying thumbnail, arranging and displaying a thumbnail included in the image information in the cell, if the determination result indicates the acquired information is Exif information.

7. An AV apparatus, comprising:
a storage for information on generating cells for image viewer, storing information on generating cells for image viewer for generating matrix-type cells for the image viewer;
an acquirer for program information, acquiring program information in EPG; and
a display, displaying the acquired program information utilizing the information on generating cells for image viewer.

8. The AV apparatus according to Claim 7, comprising:
a storage for color data, storing color data for displaying color picture,
wherein the information on generating cells for image viewer can use the color data for displaying color picture, stored in the storage for color data, in the respective cells.

9. A method for controlling an AV apparatus, storing information on generating program guide cells, the information is for generating matrix-type cells for electronic program guide, the method comprising the following steps of:
acquiring image information; and
displaying the acquired image information utilizing the information on generating program guide cells.

10. The method for controlling an AV apparatus according to Claim 9, comprising the following steps of:
determining whether or not the acquired image information is Exif information,
wherein the step of displaying comprises
a step of arranging and displaying based on Exif information, arranging and displaying a still image included in the image information and attribute information relating to the still image in cells in the same line or same column, if the determination result indicates the acquired information is Exif information.

11. The method for controlling an AV apparatus according to Claim 10,
wherein the step of displaying comprises
a step of controlling arrangement, controlling the arrangement of the still image and the attribute information relating to the still image in the step of arranging and displaying based on Exif information according to the attribute included in the Exif file.

12. The method for controlling an AV apparatus according to Claim 10 or 11, wherein
the Exif file is substituted with a moving image file.

13. The method for controlling an AV apparatus according to any one of Claims 9 to 12, comprising the steps of:
controlling scroll of the program guide cells; and
receiving input for scroll of cells including the image,
wherein the step of controlling scroll controls scroll of cells including the image based on the input for scrolling cells including the image, received by the step of receiving scroll.

14. The method for controlling an AV apparatus according to Claim 10,
wherein the step of displaying comprises
a step of displaying thumbnail for arranging and displaying a thumbnail included in the image information in the cell, if the determination result indicates the acquired information is Exif information.

15. A method for controlling an AV apparatus, storing information on generating cells for image viewer, the information is for generating matrix-type cells for an image viewer, the method comprising the following steps of:
acquiring program information in EPG; and
displaying the acquired program information utilizing the information on generating cells for image viewer.

16. The method for controlling an AV apparatus according to Claim 15, storing color data for displaying color picture,
wherein the information on generating cells for image viewer is configured to utilize the color data for displaying color picture, stored in the storage for color data, in the respective cells.
